# EUROPÄISCHE PATENTSCHRIFT

(11) **EP 1 779 354 B1**
(45) Veröffentlichungstag und Bekanntmachung des Hinweises auf die Patenterteilung: **14.07.2010**
(21) Anmeldenummer: 05778879.6
(22) Anmeldetag: 18.08.2005
(51) Int. Cl.: G08G 1/127, G08G 1/005, B61B 1/02

(54) **LEIT- UND SICHERHEITSSYSTEM FÜR KOMPLEXE VERKEHRSSYSTEME**
GUIDANCE AND SECURITY SYSTEM FOR COMPLEX TRANSPORT SYSTEMS
SYSTEME DE GUIDAGE ET DE SECURITE DESTINE AUX SYSTEMES DE CIRCULATION COMPLEXES

(30) Priorität: 18.08.2004 DE 102004040057
(43) Veröffentlichungstag der Anmeldung: 02.05.2007
(73) Patentinhaber: Rauch, Jürgen, 80637 München (DE)
(72) Erfinder: Rauch, Jürgen, 80637 München (DE)
(74) Vertreter: Becker Kurig Straus
(86) Internationale Anmeldenummer: PCT/EP2005/008955
(87) Internationale Veröffentlichungsnummer: WO 2006/018304

(56) Entgegenhaltungen:
- EP-A- 0 823 821
- EP-A- 1 306 815
- FR-A- 2 786 302
- US-A- 3 587 472
- US-A- 4 092 718
- US-A- 5 176 082
- US-A1- 2004 052 405
- US-A1- 2004 088 104
- US-B1- 6 681 174
- PATENT ABSTRACTS OF JAPAN Bd. 2003, Nr. 05, 12. Mai 2003 (2003-05-12) & JP 2003 021533 A (OKI ELECTRIC IND CO LTD), 24. Januar 2003 (2003-01-24)

## Beschreibung

Die vorliegende Erfindung betrifft ein Verkehrsleitsystem mit verschiedenen Einrichtungen zum Steuern und Sichern von Verkehrsmitteln und Leiten von Personen. Insbesondere betrifft die vorliegende Erfindung auch ein Leit- und Sicherheitssystem mit Fahrwegsicherungssystem.

Ausgangspunkt des der Erfindung zugrundeliegenden Problems ist dabei der Ist-Zustand in Verkehrssystemen, insbesondere Massenverkehrssystemen, der durch Staus und Sicherheitsprobleme, wie auch große Kapazitätsprobleme gekennzeichnet ist. Die Steuerung der Verkehrssysteme kann mit ihrem Wachstum oft nicht mithalten. In diesen Verkehrssystemen, insbesondere Metro- und Vorstadtbahnsystemen, treten täglich Verkehrsspitzen auf, welche zu Kapazitätsengpässen und mancherorts auch Systemzusammenbrüchen führen können. Es ist häufig zu beobachten, dass Passagiere nur an wenigen Stellen beispielsweise in einen U-Bahnzug einsteigen, vor allem in der Nähe von Zugängen wie Rolltreppen, auch wenn der Zug noch mehrere weitere Türen aufweist, die jedoch nicht benutzt werden. Um auch andere Türen des Zugs zum Einsteigen zu benutzen, müsste der Fahrgast von der Rolltreppe eine Strecke entlang des Bahnsteigs zurücklegen. Verständlicherweise scheuen Passagiere unnötige Wege, vor allem auch, da die Abfertigungszeiten sinken und viele Fahrer nicht darauf warten, bis einzelne Fahrgäste bis zu weiteren hinten liegenden Türen gelangt ist. Um den Zug nicht zu verpassen, ziehen die meisten Fahrgäste es daher vor, trotz des herrschenden Gedränges an der Tür einzusteigen, die ihnen am nächsten ist, also in der Regel in der unmittelbaren Nähe der Zugänge zum Bahnsteig. Dadurch wird natürlich die Standzeit des Zugs erhöht, und vor allem bei Zügen ohne innere Durchgangsmöglichkeit wird die Besetzung ungleichmäßig, so dass sich Fahrgäste in einem Zugteil drängen, wohingegen andere Zugteile leer oder weniger besetzt bleiben.

Unnötig verlängerte Standzeiten führen damit zu einer deutlichen Verringerung der Beförderungsleistung an Fahrgästen. Dadurch kann unter Umständen eine Erweiterung des entsprechenden Transportmittels geboten erscheinen, die in Wirklichkeit unnötig wäre. Bei einer derartigen unnützen Erweiterung werden dann in großem Maßstab Ressourcen verschwendet, neue Strecken gebaut, mehr Züge eingekauft etc.

Betreiber von Verkehrssystemen sehen sich darüber hinaus in zunehmendem Maße der Notwendigkeit gegenüber, die Anzahl der in einem Verkehrsmittel, insbesondere in einem Schienenfahrzeug, befindlichen Personen nach gefahrener Strecke zu einem gewissen Zeitpunkt genau zu ermitteln. Dafür gibt es verschiedene Gründe. Ein Grund besteht in der Feststellung der Effizienz einer Strecke, also zur Klärung der Frage, ob das Transportangebot angenommen wird, oder ob sich die Bedienung bestimmter Streckenabschnitte überhaupt lohnt; darüber hinaus aber auch aus abrechnungstechnischen Gründen. Dies gilt insbesondere, wenn mehrere Betreiber in einem Verkehrsverbund zusammenarbeiten, und Fahrgelder nach Beförderungsaufkommen zwischen den Betreibern aufgeteilt werden müssen.

Eine genaue Zählung mit möglichst schneller Übertragung der Ergebnisse an eine Leitstelle oder an ein automatisches System ist auch dann erforderlich, wenn es gilt, nach Bedarf auf eine erhöhte Fahrgastmenge zu reagieren, also wenn z.B. zusätzliche Züge nach dem Ende einer Großveranstaltung (Konzert, Fußballspiel), bevorzugt selbsttätig, eingesetzt werden sollen. Nur eine möglichst genaue Zählung von Fahrgästen ermöglicht dem Verkehrsbetrieb bedarfsgerecht zu arbeiten, d.h. überschüssige Züge einzusparen und dabei Kosten zu sparen. Dabei ist es wünschenswert, so früh wie möglich über ein erhöhtes Fahrgastaufkommen informiert zu sein. Dabei bieten Zählungen bei fahrerlosen, automatischen Massenverkehrssystemen auch die Möglichkeit, zeitnah zusätzliche Züge einzusetzen, ohne über Fahrer verfügen zu müssen, so dass schnell reagiert werden kann. Mit Systemen, welche die Fahrgastmenge über die Anzahl ein- bzw. aussteigender Passagiere zählen, kann natürlich nicht verhindert werden, dass es nach einem solchen Großereignis zu einem Gedränge in Bahnhöfen und auf Bahnsteigen etc. kommt. Eine Erfassung der Fahrgastmengen bereits im Vorfeld würde dies jedoch verhindern helfen. Da der Nahverkehr in den meisten Ländern (insbesondere EU-Länder) mit öffentlichen Mitteln bezuschusst wird, ist auch aus Gründen der korrekten und zielgerechten Verwendung von Steuergeldern eine genaue Erfassung geboten.

Durch eine intelligentere Verteilung der Passagiere an einem Bahnsteig kann die Einsteigezeit in haltenden Massenverkehrsmittel, insbesondere Zügen, weiter verkürzt werden und dabei eine Verkürzung der gesamten Fahrgastwechselzeit bewirkt werden. Folglich lässt sich die Taktfrequenz der Fahrzeuge erhöhen. Außerdem wird so die Besetzung des Zuges gleichmäßiger gestaltet, also beispielsweise der vorhandene Raum und/oder die Sitzplätze besser ausgenützt. Durch verkürzte Standzeiten können pro Zeiteinheit wesentlich mehr Züge im Bahnhof halten, und es können im Bahnhof befindliche und nachströmende Personen in höherer Anzahl pro Zeit bzw. in höherer Geschwindigkeit weiter transportiert werden.

Das grundlegende Prinzip eines dementsprechenden Verkehrsleitsystems ist im europäischen Patent EP 0941527 bereits offenbart. In dieser Druckschrift erstreckt sich die technische Lehre auf das optimale Leiten und Verteilen von Personen, um die Kapazität des Verkehrsmittels zu erhöhen. Vorliegende Erfindung geht darüber hinaus und erstreckt sich auf das automatische Zurverfügungstellen von Fahrzeugkapazitäten sowie die Erhöhung deren Sicherheit.

Berührungslose Kartensysteme, Zugangskontrollen usw. sind im Stand der Technik bekannt. Ebenso ist bei Kaufhäusern bekannt, diebstahlgefährdete oder teure Waren durch kleine Sender oder Metallempfänger zu sichern, die beim Durchschreiten einer Sperre am Ausgang des Geschäftes einen Alarm auslösen, wenn sie nicht bei Bezahlung entsichert worden sind. Ebenso sind Karten bekannt, die bei Bezahlung des Zutrittspreises mit einem Magnetstreifen oder einem Chip ausgestattet sind. Die Kartenform mit dem Chip o. Ä. kann dergestalt zur Verifizierung einer Zugangsberechtigung verwendet werden, so dass bereits ein Vorbeigehen an der Sperre ausreichend ist, ohne direkten Kontakt der Karte mit dem Lesegerät zu erfordern, so wie es beim Magnetstreifen noch erforderlich ist. Derartige Karten sind mit einem Chip oder kleinen Sender ausgestattet, der mit dem Lesegerät über ein Magnetfeld oder über Funk kommuniziert und den Zugang freigibt. Die Vorrichtung dient auch zur Kontrolle und insbesondere zur Sicherung vor Fälschung. Die Kosten eines Minichips z.B. für Euro-Scheine betragen derzeit ca. 20 Cent (€ 0,20). Eine große Stückzahl von Chips, etwa für jede Fahrkarte eines Verkehrsverbunds einer Großstadt, kann diese Kosten noch weiter senken.

Verschiedene Zähl- und Übertragungsmethoden existieren, sie liefern je nach eingesetzter Technologie bessere (genauere) oder weniger genaue Zählergebnisse. Sie sind aber nie exakt personenscharf, da sie systembedingt mit mehr oder weniger großer Ungenauigkeit behaftet sind. Durch entsprechende Abschätzungen kann sich der Betreiber, oder auch ein für die Sicherheit Verantwortlicher, einen Überblick darüber verschaffen, wie viele Personen sich in einem Metrozug oder in einem Metrobahnhof zu einem gegebenen Zeitpunkt befinden.

Auf diese Weise ist es aber nicht möglich, Personen zu finden, die sich möglicherweise ohne Erlaubnis an kritischen Stellen, so z.B. im Tunnelsystem (z.B. Gleistunnel bzw. Streckentunnel) außerhalb eines Zuges oder Bahnsteigbereiches aufhalten. Eine Zählung der ein- und ausgehenden Menschen an (wenigen) definierten Ein- und Ausgängen kann nicht sicherstellen, dass erkannt wird, ob und wann Personen möglicherweise nicht durch die vorgesehenen Ein- und Ausgänge gehen, sondern Fahrzeuge anders verlassen, beispielsweise aus einem Fenster steigen oder eine versehentlich offene Absperrung passieren. Somit ist es Rettungskräften im Krisenfall nicht möglich, Personen genau zu orten und diese in kurzer Zeit, die entscheidend sein kann, zu finden. Auch kann eine Vorwarnung stattfinden, wenn jemand unberechtigt in sicherheitskritische Bereiche gelangt, z.B. um ggf. Schaden anzurichten.

Beim Verkehr von Fahrzeugen auf Fahrbahnen wird traditionell vorausgesetzt, dass der Fahrzeugführer den Zustand und die Passierbarkeit der Fahrbahn während der Fahrt vorausschauend überblickt und das Fahrzeug gegebenenfalls, wenn die Sicherheit des Passierens eines Hindernisses, oder bei nicht ausreichendem Zustand der Fahrbahn oder eines vorausfahrenden Fahrzeugs nicht gewährleistet ist, zum Stehen bringt oder die Geschwindigkeit entsprechend reduziert. Dies setzt voraus, dass die Fahrgeschwindigkeit den Sichtverhältnissen für den Fahrer, der Form der Fahrbahn (Einsehbarkeit etc.) und anderen Verhältnissen (Wetter) angepasst ist, was wiederum die Leistungsfähigkeit (Kapazität) eines Verkehrsweges und des Systems Verkehrsweg/Fahrzeug minimiert und die Fahrt- bzw. Reisezeit verlängert.

Sowohl im Verkehr mit schienengebundenen Fahrzeugen als auch auf Straßen sind technische Hilfsmittel entwickelt worden, die den Fahrer über die Möglichkeiten seiner eigenen Sicht hinaus unterstützen und ihm die Passierbarkeit der Strecke für einen gewissen Abschnitt und eine gewisse Geschwindigkeit frei melden (Bahnverkehr) und/oder das Reduzieren der Geschwindigkeit, wenn erforderlich bis auf Null, ohne sein Zutun einleiten und durchführen, und auch einen Sicherheitsabstand zu einem vorausfahrenden Fahrzeug einhalten.

Zu diesen bekannten Mitteln der Verkehrssicherung gehören im schienengebundenen Verkehr u. a. das System der Signalfreigabe von Streckenabschnitten oder Blockabschnitten, Systeme wie INDUSI (induktive Zugsicherung), LZB (Linienzugbeeinflussung), Moving Block (Stand der Technik, z.B. System Maggaly mit geschwindigkeitsabhängiger Steuerung des Abstandes), Fahren auf elektronische Sicht. Diese Systeme werden ergänzt und unterstützt von internen Erkennungssystemen, die Probleme im Betrieb erkennen, wie Überwachung von Motor- und Bremsenheißlauf, Druckabfall usw., und die entweder Meldung an den Fahrer geben oder (insbes. im Schienenverkehr) das Fahrzeug auch ohne Zutun einer Person zum Stehen bringen.

Diesen vorgenannten Systemen, die Stand der Technik sind, fehlt eine automatische Hinderniserkennung. Blockfreimeldungen beziehen sich in der Regel auf vorausfahrende Fahrzeuge, nicht aber auf die Hindernisfreiheit der Strecke, also das Freisein von anderen Gegenständen, die eine Sicherheitsgefährdung der Durchfahrt darstellen. Auch der Zustand, die Sicherheit und Hindernisfreiheit von Asphalt- oder Betonfahrbahnen kann noch nicht einzelnen Fahrzeugen automatisch durchgemeldet werden.

Die Erhöhung von Sicherheit und Leistungsfähigkeit von Streckenfreimeldungen ist auch aus folgenden Gründen erforderlich und wünschenswert. Im Schienenverkehr sind die bewegten Massen höher und die Bremswege systembedingt (Stahlrad-Schiene) länger als im Straßenverkehr, Strecken können gegebenenfalls von Personen nicht mehr einsehbar sein, infolge von Kurven, Wannen oder Kuppen, also Richtungsänderungen einer vorbestimmten Fahrbahn im Grundriss oder Längsschnitt. Ferner sind die gefahrenen Geschwindigkeiten bei Hochgeschwindigkeitsstrecken so hoch, dass ein rechtzeitiges Reagieren allein aufgrund der Geschwindigkeit, der in einer menschlichen Reaktionszeit durchfahrenen Strecke und der aus der Geschwindigkeit resultierenden Bremswege nicht mehr möglich ist.

Eine automatische Hinderniserkennung in Ergänzung zur Fahrwegfreimeldung (Freiheit von oder ausreichender Abstand vor vorausfahrenden Fahrzeugen) ist auch aus folgenden Gründen erforderlich. Unwetter, im Übrigen weltweit zunehmend, können Hindernisse auf den Fahrweg bringen. Probleme an Kreuzungen (auch ebenengetrennte) von Verkehrswegen, Über- und Unterführungen etc. können auftreten. Ein Eindringen von Personen und Gegenständen auf den Fahrweg ist möglich. Mutwillige Manipulationen am Fahrweg sind bereits bekannt. Die Gefahr terroristischer Aktionen steigt. Eine personalaufwendige Überwachung des gesamten Gleisbereichs könnte dabei elektronisch unterstützt werden.

Schließlich ist das Überwachen weiter Strecken sehr schneller und sensibler Verkehrsinfrastruktur (Hochgeschwindigkeitsbahnen, Magnetschwebebahnen, inklusive der Bahnhöfe und deren Zugangsanlagen) durch Personen, auch mit Kamera-Bildschirm-Unterstützung mit Hilfe von Datenfernübertragung, nicht mehr vorstellbar, da es zu personalaufwendig ist. Selbst wenn es ökonomisch sinnvoll wäre, dafür Personal zur Verfügung zu stellen, macht eine Objektüberwachung mit Bildübertragung per Video ohne dahinter liegende Intelligenz für die Überwacher keinen Sinn, da über Monate, vielleicht Jahre hinweg an bestimmten Punkten kein Hindernis, kein Zwischenfall, und keine beabsichtigte Obstruktion, kein Terrorakt vorliegt, der Ort des Hindernisses auf der Strecke mit einer Vielzahl von Überwachungspunkten auch nicht im vorhinein bekannt ist, so dass für die überwachenden Personen das dauernde Beobachten über lange Zeit unveränderlicher Bilder zu Langeweile und Gewöhnung führen kann, andererseits aber im Falle des Auftretens eines Vorfalls an einem dieser vielen Punkte eine Katastrophe mit Hunderten von Opfern die Folge sein kann.

Das ständige Abscannen eines Fahrweges durch die Person des Fahrers über längere Zeit kann ebenfalls zu Zuständen der Gewöhnung und Unaufmerksamkeit, evtl. sogar zu einer gewissen Trance führen (Erkenntnisse aus der Psychologie), so dass selbst unter der Annahme, ein schnelles Durchfahren einer (bei hoher Geschwindigkeit noch) übersichtlichen Strecke mit z.B. 350 km/h sei noch (allein mit menschlichen Mitteln) beherrschbar, eine ausreichende Sicherheit nicht gewährleistet werden kann.

In der jüngsten Zeit wurden intelligente Bilderkennungssysteme mit künstlicher Intelligenz entwickelt, die Veränderungen im Bild, insbesondere kritische oder gefährliche Veränderungen, automatisch, ohne Zutun eines Betrachters mit sehr hoher Sicherheit erkennen und z.B. Alarm auslösen können. Sie können damit aber auch jede andere, durch ein elektronisches Programm vorgegebene Aktion auslösen, wie z.B. die Geschwindigkeitsreduktion oder die Zwangsbremsung eines Schienenfahrzeuges.

Aus der Druckschrift US 2004/0088104 A1 ist ein Fahrzeugverwaltungssystem zur Koordination von Passagieren und Fahrzeugen zu deren Beförderung bekannt.

Aus der Druckschrift US 4,092,718 ist ein computergestütztes Dispatching-System für Busse, Limousinen und Taxis bekannt.

Aus der Druckschrift US 3,788,232 ist ein Kabinentransportsystem für Personen bekannt.

Eine Aufgabe der vorliegenden Erfindung besteht unter anderem darin, ein Leitsystem bereitzustellen, mit dem die Erfassung von Personen personenscharf und zeitnah möglich ist. Eine genaue Zählung von insbesondere Fahrgästen in Massenverkehrsmitteln soll dadurch bereitgestellt werden. Durch eine Ortsbestimmung von Personen soll das System flexibel auf verschiedene Bedingungen reagieren können und beispielsweise in einem Katastrophenfall den Rettungsdiensten die Arbeit erleichtern. Ebenso sollen Gegenstände automatisch erkennbar sein, insbesondere wenn sie einen Einfluss auf Betrieb und Sicherheit des Verkehrssystems haben können.

Ferner besteht die Aufgabe der Erfindung darin, ein System zu schaffen, in dem die Daten der Zählung, Überwachung und Beobachtung vorzugsweise ohne Zutun von Personen automatisch ausgewertet werden und die wesentlichen Betriebs- und Sicherheitsfunktionen des Verkehrssystems zum Zwecke der Erhöhung von Betriebssicherheit, Personensicherheit und Effizienz des Betriebes selbsttätig gesteuert werden. Eine Eingriffsmöglichkeit von verantwortlichen Personen in der Leitzentrale soll dabei nicht ausgeschlossen werden, bevorzugt ist, dass das System aber ohne Personaleinsatz läuft.

Zweck der Erfindung ist das Steuern und Sichern des Verkehrssystems, Steuern in Hinsicht auf Fahrzeugeinsatz, Prüfen in Hinsicht auf das Kontrollieren der Personen (automatische Kontrolle Fahrberechtigung bis hin zur Prävention von Terrorismus), Gewährung der Sicherheit im Katastrophenfall (Orientierung, Leiten und Finden von Personen aufgrund Chipkarte etc) und Checken der Strecke im Normalbetrieb und Katastrophenfall.

Der Erfindung liegt der Gedanke zugrunde, die fahrgastmengenabhängige automatische Einsatzsteuerung von Fahrzeugen vorzusehen, ebenso die kameragestützte Streckenüberwachung. Kameragestützt ist dabei auch die Sicherheitsüberwachung der baulichen Infrastruktur, Haltestellen, Züge etc., in Verbindung mit vorhandenen Teil-Techniken der Erkennung z.B. von Bränden, durch intelligente Bildauswertung, aber auch von kriminellem Verhalten in öffentlichen Verkehrsmitteln, bis hin zu gefährlichem Verhalten (z.B. Koffer mit Sprengstoff etc.). Das System schließt den Aspekt der Fahrwegsicherung mit ein.

Sinn der Zusammenfassung dieser verschiedenen Funktionen ist ferner sowohl die Mehrfachverwendbarkeit von Geräten zur Datengewinnung (z.B. Kameras, Sensoren usw.) und von Datenausgabegeräten (z.B. Fahrgastinformationsdisplays, Lautsprecher etc.) als auch die Nutzung eines "Backbone" für die Informationstechnologie-Infrastruktur, was ferner einen Personal sparenden Betrieb eines Verkehrssystems erlaubt wie auch vielfältige Möglichkeiten zu seiner Absicherung bietet.

Der vorliegenden Erfindung liegt daher ein allumfassendes Leit- und Sicherheitssystem für Verkehrsmittel zugrunde, insbesondere für komplexe Massenverkehrsmittel, wobei automatische Zählung von Passagieren, Sicherheitsüberwachung, z.B. gegen Brand, Kriminalität und Terrorismus, Steuerung des Einsatzes von Einzelkomponenten des Verkehrssystems wie Fahrzeugen, Zügen usw., automatische Überwachung der Fahrstrecke und Information der Passagiere durch einen "Backbone", ein elektronisch-technisches Rückgrat miteinander funktionell verbunden sind. Die Teilfunktionen des Systems, die vollständig oder teilweise in dem System integriert und in Betrieb gesetzt werden können, nutzen vorzugsweise Datenleitungen, um die bei Großinvestitionen in Informationstechnologie bei Verkehrssystemen anfallenden Kosten in Grenzen zu halten. Dabei sollen bevorzugt weitere Elemente wie Zugangskontrolle zu Verkehrsmitteln (z.B. Biometrie), Verfolgung von Wegen von Fahrgästen, automatische Lenkung der Evakuierung (z.B. im Brand- und Katastrophenfall) aus Fahrzeugen, Zügen oder der gebauten Infrastruktur, automatische Streckenüberwachung, Verhinderung von Eindringen von Personen in betriebsnotwendige Bereiche usw., aber auch jede Art von Fahrgastinformation wie auch Werbung usw. an das Leit- und Sicherheitssystem ergänzt werden.

Die vorliegende Erfindung ist auf ein fahrgastmengen- und sicherheitsparameterabhängiges Steuerungssystem gerichtet, welches die Funktionen von Fahrgastleitung und Fahrgastinformation vorzugsweise integriert, aber auch ohne diese Funktionen funktionsfähig ist.

Daher ist es ein Gedanke der Erfindung, die Bilder und Daten hoch auflösender vorzugsweise digitaler Kameras, insbesondere Videokameras, die Daten elektronischer Bildverarbeitung und intelligenter, mit und ohne menschliches Zutun erfolgender Bilderkennung, die erfassten Daten von Bewegungs- und Handlungsmustem, von Dreidimensionalität insbesondere paralleler Standorte auf einer Fahrstrecke der Schienen- oder Straßeninfrastruktur, aber auch von Wasserwegen, Landebahnen etc. in elektronische Handlungsanweisungen generierende Systeme einzuspeisen, wo sie kombiniert sind mit der Steuerung automatischer oder halbautomatischer, den Fahrer unterstützender oder fahrerloser Fahrzeuge oder anderer Verkehrsmittel wie Magnetschienenfahrzeuge oder nicht bodengebundener Verkehrsmittel, um an diesen Fahrzeugen Bewegungsoperationen auszulösen, welche Gefahren während der Fahrten dieser Verkehrsmittel vermeiden, oder wo sie Alarm auslösen oder andere Gefahren vermeiden.

Bei der Implementierung der Erfindung ist es unerheblich, ob eine aus Sicherheitsgründen erforderliche Zwangsbremsung durch die Ergebnisse elektronischer Bildverarbeitung ausgelöst wird, oder die Bereitstellung weiterer Züge, wenn das System die Überfüllung der Bahnsteige erkennt.

Ein Element der Erfindung ist die Absicherung des Fahrweges, sowohl im Bahnsteig- bzw. Bahnhofsbereich als auch im Streckenbereich. Diese Aufgabe kann im Bahnsteigbereich durch die intelligente Verarbeitung digitaler Bilder (wie unten beschrieben) geschehen, aber auch im Streckenbereich sowohl durch die Erkennung von illegal eingedrungenen Personen über Sender als auch über die Verarbeitung digitaler Bilder der Strecke, wobei die oben beschriebene Zählung bzw. Fahrtauslösung auch dahingehend genutzt werden kann, dass Fahrten gestoppt werden (Zwangsbremsung), wenn Hindernisse auf dem Fahrweg, vorzugsweise automatisch erkannt oder auch durch die Beobachtung der Streckenbilder durch Personen in der Leitzentrale erkennbar werden.

Die Aufgabe der Erfindung wird gemäß einem Aspekt der Erfindung gelöst durch ein Leitsystem, insbesondere in Massenverkehrsmitteln, das mit Erfassungseinheiten die Position von Personen und Gegenständen in begrenzten räumlichen Bereichen erfassen kann, und das in Abhängigkeit davon verschiedene Leitmittel so steuern kann, dass Personen in eine gewünschte Richtung geleitet und Verkehrsmittel geleitet und gesteuert werden. Dabei ist unter der Leitung von Personen und mindestens einem Verkehrsmittel im Rahmen der Erfindung ebenso zu verstehen, dass Verkehrsmittel, die dem Transport von Personen dienen, geleitet bzw. gesteuert werden. Die ermöglichte genaue Überwachung von Personen(strömen) soll gemäß der Erfindung dabei weitgehend genutzt werden. Die einmal gewonnenen Daten können für weitere anfallende Aufgaben der Steuerung und Leitung von Personen und Verkehrsmitteln nutzbringend verwendet werden. Zusätzlich kann mit verschiedenen Reaktionsmitteln im und außerhalb des Systems die Sicherheit erhöht werden.

Gemäß einem Aspekt der Erfindung wird ein Verkehrsleitsystem gemäß einem der unabhängigen Ansprüche 1, 2 und 3 bereitgestellt. Vorteilhafte Weiterbildungen sind in den abhängigen Ansprüchen angegeben.

Die Zentraleinheit ist dabei mit den Erfassungseinheiten und mit dem Leitmittel verbunden, dies kann über drahtgebundene oder drahtlose Verbindungen erfolgen. Die

Erfassungseinheiten sind dazu bestimmt, die Anzahl von Personen zu ermitteln, die sich zu einem bestimmten Zeitpunkt in einem bestimmten räumlichen Bereich befinden. Die Zentraleinheit kann in Abhängigkeit davon das Leitmittel so steuern, dass ein optimaler Transport der erfassten Personen aus bestimmten räumlichen Bereichen hinaus oder in bestimmte räumliche Bereiche hinein erreicht wird. Verkehrsmittel können also so angesteuert werden, dass ein solcher gewünschter optimaler Transport erreicht werden kann. Das erfindungsgemäße System ermöglicht daher auf einer sehr flexible Art und Weise, eine bessere Ausnutzung von beispielsweise Bahnhöfen/Bahnsteigen, Verkehrssystemen und Fahrzeugen zu erreichen, indem eine jeweils angemessene Transportkapazität (Frequenz, Zuglänge etc.) realisiert werden kann. Dadurch werden Warte- bzw. Haltezeiten von Verkehrsmitteln reduziert, durch das Vermeiden von Stauungen werden die entsprechenden Zugangswege besser genutzt usw. Durch die Erfassung, die mit der Erfindung personenscharf möglich ist, kann zu jedem gegebenen Zeitpunkt ein Bild der Aufenthaltsorte von Personen gezeichnet werden, was es Nutzern des erfindungsgemäßen Systems erlaubt, viel flexibler auf die unterschiedlichsten Situationen zu reagieren, die sich beispielsweise in einem Nahverkehrsverbund ergeben können. Die Erfindung ist allgemein in jedem Fall geeignet, in dem ein gewünschter, flexibler Transport von Personen in bestimmten Bereichen erreicht werden soll. Für den Betreiber ergeben sich Kostenvorteile und eine erhöhte Betriebssicherheit, während für die Personen, d.h. Nutzer, ein deutlich verbesserter Komfort einschließlich eines schnelleren Transports erreicht wird. Gleichzeitig wird der Fahrzeugeinsatz scharf am Bedarf gesteuert, d.h. nur die wirklich benötigten Kapazitäten werden in Gang gesetzt. Treten Gründe auf, die den Betrieb stoppen sollen, so löst das System selbsttätig dazu Befehle aus, alle der Sicherheit dienlichen Systemreaktionen werden damit ohne Verzögern ausgelöst.

Es wird bevorzugt, dass die Zentraleinheit die Leitmittel so steuern kann, dass die erfassten Personen in den bestimmten räumlichen Bereichen optimal verteilt und in Verkehrssystemen effizient und schnell weiterbefördert werden. Dies ermöglicht, insbesondere bei Großveranstaltungen mit hohem Personenaufkommen, aber auch bei Katastrophenfällen wie Bränden etc., Personenströme auf eine gewünschte Weise zu leiten, um Stauungen in bestimmten Bereichen zu vermeiden, ein bestehendes Gedränge auf einem Bahnsteig schnellstmöglich aufzulösen usw. Damit können Bahnsteige schneller geräumt werden, zusätzlich erfindungsgemäß vom System eingesetzte Züge können bereits den nächsten Personenansturm abarbeiten. Wenn vom Verkehrsbetreiber Zusatzzüge auf abweichenden Gleisen eingesetzt werden, können Personen gezielt in diese Abschnitte gelenkt werden. Bei Messen und Ähnlichem kann- die Leitung eines eventuellen Besucherandrangs besser durchgeführt bzw. bewerkstelligt werden. Vorhandene Räume, etwa Bahnsteige, werden dadurch besser ausgenutzt, und können daher für größere Personenströme ausreichend sein als herkömmlich bei einer "chaotischen" Verteilung. Die Kapazität von vorhandenen Linien kann durch das System entscheidend gesteigert werden, ein teurer Neubau oder eine Erweiterung (Tunnelbauarbeiten, Grundstücksbeanspruchung usw.) wird vermieden, hohe Kosten werden eingespart.

Es wird bevorzugt, bei fahrerlosen und / oder automatischen vorzugsweise spurgeführten Verkehrssystemen, die Zähldaten und die Berechnungen daraus zur Disposition z.B. zusätzlicher Fahrzeuge zu verwenden oder den Einsatz dieser Fahrzeuge automatisch auszulösen. Analog dazu können bei niedrigem Fahrgastaufkommen auch Fahrzeuge automatisch aus dem Umlauf herausgenommen oder zugesetzt werden.

Es wird bevorzugt, dass die Erfassungseinheiten Verkaufsautomaten für Fahr- oder Eintrittskarten umfassen, wobei die Verkaufsautomaten die Position einer Person aufgrund der Position des entsprechenden Verkaufsautomaten beim Kauf von Fahr- oder Eintrittskarten bestimmen können. Da Fahrkartenautomaten bereits Teil jedes Verkehrsverbunds sind, teilweise nur in Bahnhöfen, aber auch in Fahrzeugen angebracht, bietet es sich an, diese entsprechend zu verwenden. Auch wenn die Erfassung der Position im Wesentlichen auf den Zeitpunkt eines Fahrkartenkaufs beschränkt ist, stellt diese einfache Ausführungsform der Erfindung bereits wesentliche Vorteile bereit. Positionserfassung kann beispielsweise auch stattfinden durch/an: Verkaufsautomaten, Sperren, sowie durch Sender-Empfänger-Vorrichtungen an Fahrtreppen und Treppen, Aufzügen, in Durchgangsfluren und/oder Zugtüren.

Weiterhin wird bevorzugt, dass die Verkaufsautomaten mit einer Vorrichtung ausgestattet ist, welche in der Lage ist, biometrische Merkmale des Reisewilligen abzufragen. Die Verkaufsautomaten sollen vorzugsweise mit einer Datenleitung mit einer Datenbank verbunden sein, mit der geprüft wird, ob gegen den Reisewilligen möglicherweise etwas vorliegt, das den Betreiber veranlassen könnte, ihn von der Reise auszuschließen. Eine weitere Variante kann vorzugsweise sein, dass von einer zentralen Stelle Jahres-, Monats- oder andere Zeitkarten hergestellt werden, die biometrische Daten enthalten, und / oder von einem Verkaufsautomaten diese Karten ausgegeben werden, wobei die Karten ausgebende Stelle sowie der Verkaufsautomat online mit einer Datenbank verbunden sind, mit der biometrische Daten beispielsweise von einschlägig bekannten bzw. gesuchten Personen abgeglichen werden können. Damit kann die Ausgabe einer Karte an eine solche Person und damit die Benützung des Verkehrssystems verweigert werden. Als biometrische Merkmale gelten Fingerabdrücke, Iriserkennung z.B. über eine in den Bildschirm des Verkaufsautomaten integrierte Kamera, aber auch die Geometrie der Hand und deren Linien etc. Da die Zugangskontrolle zum Verkehrssystem bevorzugt ist, erscheint der Fingerabdruck die Lösung, die vorzugsweise weiterverfolgt werden dürfte.

Die ausgegebene Karte enthält sowohl die biometrischen Daten z.B. auf einem Chip (bevorzugt) oder Magnetstreifen aufgezeichnet bzw. einprogrammiert als auch eine Art "Pad", vorzugsweise ein Mikrolesegerät, welches ein biometrisches Merkmal, vorteilhafterweise einen Fingerabdruck oder die Struktur einer Fingerkuppe, abtastet und anhand von mathematischen Parametern mit den einprogrammierten Parametern vergleicht, d.h. die durch berührungslose Funktionen (Transponder oder ähnliches) ausgestattete Karte gibt am Kontrollpunkt, z.B. Zugangsschranke zur Metro oder Bahn (Sperrengerät) die Zutrittsberechtigung nur derjenigen Person frei, welche die gleichen biometrischen Merkmale aufweist, weil sie im Kontrollmoment die Karte mit demselben Finger berührt wie beim Erwerb der Karte (siehe oben). Durch das hier nochmals explizit beschriebene Trennen von Absuchen der Datenbanken und einer zeitsparenden 1:1-Kontrolle am Zugang zum Verkehrsmittel oder Bahnsteig selbst kann der Kontrollvorgang so weit entzerrt werden, dass er ein hohes Maß an Sicherheit für das Verkehrssystem darstellt, ohne gleichzeitig den Betrieb zu verlangsamen.

Folgende Funktionsweise wird dabei bevorzugt. Eine Person mit Karte verlangt Zugang zum Verkehrssystem. Das Gerät am Kontrollpunkt fragt ab: Stimmt mathematischer Parameter der biometrischen Daten auf dem Chip mit mathematischem Parameter der Biometrie der bedienenden Person, die eingelesen werden, überein? Wenn ja, wird der Zugang gestattet; wenn nein, wird der Zugang verweigert.

Ferner wird bevorzugt, dass die Verkaufsautomaten eine Gültigkeits-Reichweite oder ein entsprechendes Fahrtziel einer gekauften Fahrkarte ermitteln und daraus eine voraussichtliche Bewegungsrichtung oder ein voraussichtliches Ziel eines Fahrkartenkäufers bestimmen können, und die Zentraleinheit das Leitmittel in Abhängigkeit von dieser Bewegungsrichtung steuern kann. Der Fahrkartenautomat kann leicht bereits beim Ausgeben der Fahrkarte den Gültigkeitsbereich, etwa 2 Stationen oder bestimmte Ringe eines in Ringe aufgeteilten Systems, ermitteln, in einer fortgeschritteneren Variante auch das genaue Ziel einer Fahrkarte. Daraus lassen sich Rückschlüsse auf die voraussichtliche Richtung ziehen, in die sich der entsprechende Fahrkartenkäufer bewegen wird. Werden beispielsweise in einem gewissen Zeitrahmen eine große Menge an Fahrkarten zu einem bestimmten Ziel oder mit einer bestimmten Reichweite gekauft, kann der Verkehrsbetreiber Zusatzzüge einsetzen, um einen möglicherweise drohenden Stau zu vermeiden. Für eine Abschätzung genügt dabei eine Gültigkeits-Reichweite zusammen mit der bekannten Position des jeweiligen Verkaufsautomaten.

Das System kann erfindungsgemäß bevorzugt die Entscheidung automatisch treffen, oder dem Dispatchingpersonal entsprechende Anweisungen ausarbeiten. Ein Fahrgast, der an einem Automaten in Ring 1 eine Fahrkarte mit Reichweite bis Ring 3 erwirbt, wird voraussichtlich auch bis in den Bereich von Ring 3 fahren wollen. Diese Information kann sinnvoll genutzt werden, zu erwartende Anforderungen an ein Verkehrssystem zu erfassen und entsprechend zu handeln. Das Sammeln von Information über Fahrtwünsche und die daraus folgende Auswertung hinsichtlich des Bedarfs ist bereits Stand der Technik, (US 4,092,718), die automatische Auslösung von Fahrbefehlen im Zusammenhang mit Zähldaten oder einem komplizierten Rechenmodell, das hereinkommende Fahrzeuge hinsichtlich ihres Umsteigeverkehrs, wie Busse, die an Metrohaltestellen Fahrgäste abgeben und andere Quellen zusammenfasst, ist erfindungsgemäß bevorzugt und wird als Lösung für die nachfrageabhängige automatische Fahrtendisposition angeboten.

Das erfindungsgemäße System steuert den Einsatz von Zusatzzügen auch durch automatische respektive fahrerlose Systeme, insbesondere durch Empfehlung an Dispatcher oder auch automatisches Auslösen von Fahrbefehlen für Zusatzzüge und automatisches Einschleusen derselben in das Verkehrssystem / Verkehrsnetz. Die Kombination dient zur Erreichung eines optimalen Zieles im Sinne des erfindungsgemäßen Zweckes des vorliegenden Verkehrsleit- und -Sicherheitssystems. Dies ist die optimale Nutzung der gebauten und vorhandenen Infrastruktur unter dem Aspekt der Leistungsmaximierung mit den vorhandenen baulichen Mitteln und der vorhandenen Fahrzeugflotte, da Leitelektronik in jedem Fall preisgünstiger für ein Verkehrssystem ist als Neubau oder Beschaffung weiterer Fahrzeuge.

Es wird bevorzugt, dass die Erfassungseinheiten Zugangskontrolleinrichtungen umfassen, und dass die Zugangskontrolleinrichtungen die Position einer Person aufgrund der Position einer durchquerten Zugangskontrollvorrichtung bestimmen können. Solche Zugangskontrolleinrichtungen sind bereits häufig in Bahnhöfen und dergleichen vorhanden oder können einfach und kostengünstig nachgerüstet werden, etwa Lichtschranken, Drehschranken, elektrisch betriebene Türen und dergleichen. Aus der Position einer entsprechenden Zugangskontrolleinrichtung kann zu dem Zeitpunkt eines Durchgangs die Position der entsprechenden Person ermittelt werden. Insbesondere ist dabei bevorzugt, das System so über den üblichen technischen Stand von Zugangssperren hinaus auszulegen, dass einer im Verkehrssystem nicht erwünschten Person aus Sicherheitsgründen der Zugang verweigert wird.

Des weiteren ist bevorzugt, sobald die Grenze einer Kapazitätserhöhung und Reisezeitverkürzung durch Fahrgastlenkung erreicht ist, mit derselben Datenbasis und demselben Rechenprogramm die Bereitstellung weiterer Fahrzeuge, vorzugsweise spurgeführte oder Schienenfahrzeuge automatisch auszulösen, die ohne weiteres Zutun einer Person zum Einsatz und in Funktion gebracht werden können, wenn die Infrastruktur automatischen, fahrerlosen Betrieb zulässt.

Es wird bevorzugt, dass die Zugangskontrolleinrichtungen weiter die Durchgangsrichtung durch die entsprechende Zugangskontrollvorrichtung bestimmen können, und die Zentraleinheit das Leitmittel in Abhängigkeit von dieser Durchgangsrichtung steuern kann. Diese Information ist sehr nützlich, denn es ist ja wichtig zu erkennen, ob Personen einen Bahnhof betreten oder verlassen. Dies kann durch Zugangskontrolleinrichtungen mit "Einbahn-Funktion", etwa nur in einer Richtung zu durchquerenden Drehschranken, oder durch Doppellichtschranken und Ähnliches erreicht werden. Aus der hiermit ermittelten Richtungsinformation können wertvolle Daten zur Steuerung des Leitmittels gewonnen werden.

Es wird bevorzugt, dass die Erfassungseinheiten Bildaufzeichnungsvorrichtungen umfassen, wobei die Bildaufzeichnungsvorrichtungen die Position und/oder Geschwindigkeit einer Person oder eines von einer Person mitgeführten Gegenstands innerhalb des Erfassungsbereichs der entsprechenden Bildaufzeichnungsvorrichtungen bestimmen können, und die Zentraleinheit das Leitmittel in Abhängigkeit von dieser Position bzw. Geschwindigkeit steuern kann. So kann etwa durch bereits bekannte computergesteuerte Bildverarbeitung (Objekterkennung, Gesichtserkennung und dergleichen) ermittelt werden, wie sich Personen und mitgeführte Gegenstände bewegen.

Da Videoüberwachung bereits häufig eingesetzt wird, es ist sehr vorteilhaft, diese im Rahmen des Systems der Erfindung auch für die Zählung einzusetzen. Automatisch kann dabei im Hintergrund vorzugsweise verfolgt werden, ob Personen Gegenstände, die sie beim Betreten des Metrobahnhofs mit sich führten, diese weiterhin mit sich führen, andernfalls wird sofort über intelligente Hintergrundsoftware Alarm ausgelöst bzw. es können weitere Maßnahmen veranlasst werden (z.B. Evakuierung). Die Bildaufzeichnungsvorrichtungen sind vorzugsweise auch mit Erkennungssystemen kombiniert, welche es ermöglichen, eine Person wiederzuerkennen oder eine gesuchte Person aus dem Personenstrom herauszufiltern.

Es wird ferner bevorzugt, dass die Erfassungseinheiten mehrere persönliche Sender, die jeweils zum Mitführen durch eine Person bestimmt sind, wobei jeder Sender eine Kennung senden kann, sowie mehrere Empfangseinrichtungen zum Empfangen der Kennungen der Sender umfassen, und dass die Empfangseinrichtungen die Position einer Person aufgrund eines Empfangs von Kennungen bestimmen können. Dies ermöglicht eine berührungslose Erfassung der Position von Personen, die bezüglich (örtlicher und insbesondere zeitlicher) Genauigkeit noch über die vorstehend genannten Varianten hinausgeht. Im Prinzip kann zu jedem Zeitpunkt, nicht nur beim Durchqueren einer Schranke oder beim Kauf einer Fahrkarte, die Position ermittelt werden. Dadurch wird eine noch genauere Reaktion auf Änderungen der Gegebenheiten in einem Verkehrssystem oder dergleichen erreicht.

Es wird bevorzugt, dass die Sender in einer Fahr- oder Eintrittskarte integriert sind. Da solche Karten von Fahrgästen oder Besuchern erworben werden müssen, bietet sich die Integration in diesen Karten natürlich bevorzugt an.

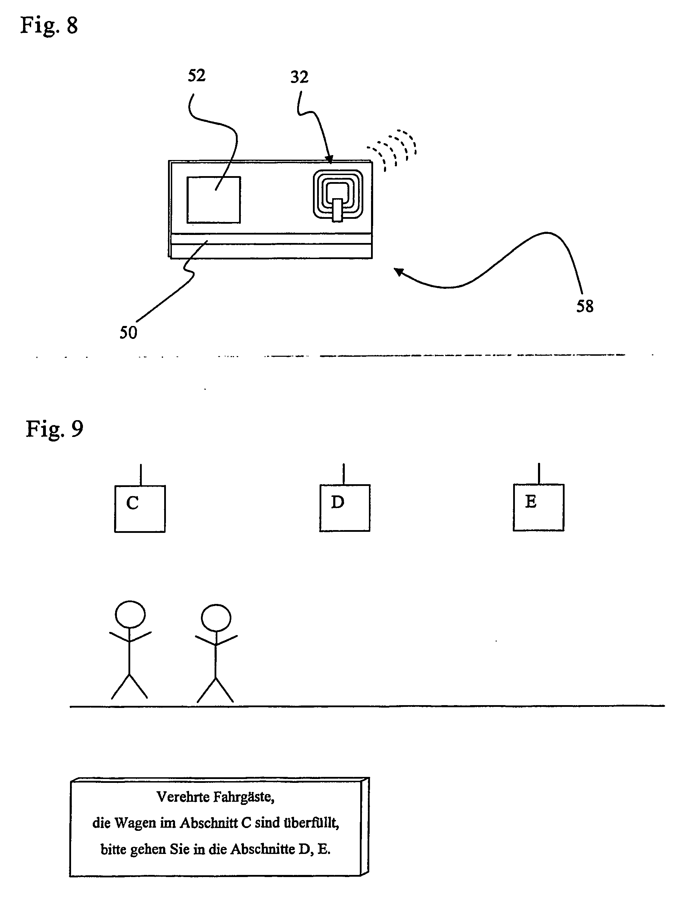

Es wird bevorzugt, dass die Karte biometrische Daten eines Trägers aufweist. Sowohl personengebundene als auch nicht personengebundene Karten können ein so genanntes "Pad" bzw. Feld enthalten, auf dem beim Kauf eine biometrische Information gespeichert wird, vorzugsweise ein Fingerabdruck, etwa bei der Entnahme einer Fahrkarte aus einem Automaten. Beim Durchgang durch eine Kontrollsperre, oder wann immer gefordert, muss die gespeicherte biometrische Information gleich der des Trägers der Karte sein wie beim Kauf/dem in Empfang Nehmen. Dies ist insbesondere vorteilhaft, wenn zwischen Kauf der Berechtigung, das Verkehrsmittel zu benutzen, und dem Besteigen des Verkehrsmittels selbst, z.B. an einer Zug- oder Bahnsteigtüre, aber auch beim Boardingvorgang eines boden- oder nichtbodengebundenen Verkehrsmittels, eine nochmalige Kontrolle der Identität des Reisenden vorgenommen werden soll. Die in der Fahrkarte mögliche Kombination mit der Abfrage biometrischer Merkmale ist bereits weiter oben beschrieben (schnelle Zugangskontrolle für Metrosysteme) und ist bevorzugt. Sie ist in Fig. 8 gesondert grafisch dargestellt.

Es wird bevorzugt, dass die Empfangseinrichtungen aufgrund einer Veränderung der Position eines Senders die Bewegungsrichtung einer Person zu bestimmen, und die Zentraleinheit das Leitmittel in Abhängigkeit von der Bewegungsrichtung steuern kann. Die Vorteile der Ermittlung der Bewegungsrichtung wurden bereits angesprochen, allerdings ermöglicht die Erfassung mit Hilfe der Sender eine wesentlich genauere Erfassung als bei den vorstehend beschriebenen Varianten.

Es wird bevorzugt, dass die Empfangseinrichtungen aufgrund einer Veränderung der Position eines Senders die Geschwindigkeit einer Person in Bezug auf eine oder mehrere Empfangseinrichtungen bestimmen können, und die Zentraleinheit das Leitmittel in Abhängigkeit von der Geschwindigkeit steuern kann. Die Ermittlung der Geschwindigkeit ermöglicht zusammen mit der bekannten Richtung das Erkennen bestimmter Situationen und ein frühzeitiges Eingreifen des Systems. Wird beispielsweise erkannt, dass eine große Anzahl Menschen einen Bahnhof betritt, die schnell in Richtung eines bestimmten Gleises gehen, können Aufzüge, Rolltreppen etc. derart geschaltet werden, dass ein Gedränge möglichst vermieden wird. Weiterhin kann anhand der Geschwindigkeit bestimmt werden, wann die Menschen den Bahnsteig etwa erreichen werden, so dass ein Bereitstellen von Zusatzzügen etc. möglichst zeitnah erfolgen kann. Dies geschieht erfindungsgemäß automatisch. Die dafür erforderliche Software ist jeweils an die entsprechende bauliche Infrastruktur anzupassen. Erfindungsgemäß ist dabei die Befolgung des beschriebenen Prinzips bevorzugt.

Das Bereitstellen der Zusatzzüge erfolgt bevorzugt automatisch. Die gewonnenen Daten aus dem erfindungsgemäßen System werden in die Steuerung des Verkehrssystems übertragen, wo sie Empfehlungen, an Fahrer oder an ein automatisches und fahrerloses System Fahrbefehle zu geben, an das Steuerungspersonal geben oder bevorzugt automatisch und selbsttätig entsprechende Fahrbefehle fahrerloser Züge auslösen. Auch kann, durch die Vernetzung von Fahrtreppen, Aufzügen usw. vorausgesetzt, im Zuge einer Mehrfachnutzbarkeit Datenmaterial gewonnen werden, welches Informationen für die automatische Zugsteuerung und für die Wartung der Aufzugsanlagen, Fahrtreppen, Rollbänder und andere Einrichtungen generiert und an die entsprechenden Datenverarbeitungsanlagen (z.B. zur Auslösung eines Reparaturbefehls u.a.) weitergibt.

Also kann beispielsweise die Wartung von (nicht dauerhaft laufenden) Rolltreppen und dergleichen nach einer bestimmten Laufzeit bzw. Betriebszeit somit genau geplant werden, anstelle von festen Zeitintervallen, die der erfolgten Abnutzung evtl. nicht gerecht werden. Damit wird ein entscheidender Beitrag zur Verbesserung des in Verkehrssystemen aufwendigen "Facility Managements" zugunsten der Betreiber geleistet und den Betreibern werden Kosten erspart, die auch zur Amortisation des Gesamtsystems beitragen.

Es wird bevorzugt, dass die Kennung des persönlichen Senders eine eindeutige Identifikation einer Person aufweist. Dabei ist vor Allem an Fahrkarten wie etwa nicht übertragbare Monats- oder Jahreskarten gedacht. Bei einer Kontrolle durch Bahnpersonal etwa kann dann die Berechtigung eines Trägers der entsprechenden Karte überprüft werden. Die Identifikation kann gemäß den vorliegenden Datenschutzbestimmungen oder sonstiger Vorgaben des Betreibers gestaltet werden, etwa so, dass nur entsprechende Stellen aus der Identifikation den Besitzer der Karte ermitteln können (Kundennummer bei dem Verkehrsbetreiber o. Ä.). Die personalisierte Fahrberechtigung hilft auch zum Abbau von Kriminalität, Unsicherheit, Vandalismus etc. in öffentlichen Verkehrssystemen - Problemen, die sowohl die Anerkennung des Verkehrssystems wie das subjektive Sicherheitsempfinden in hohem Maße positiv beeinflussen werden.

Es wird bevorzugt, dass die Kennung des persönlichen Senders eine Gültigkeitsinformation aufweist, wobei die Gültigkeitsinformation eine erlaubte Zeitspanne, einen erlaubten räumlichen Bereich oder eine Fahrtreichweite oder -strecke angibt. Dies wird vor allem nützlich sein, um auf der Karte beispielsweise den Monat zu vermerken, in dem die Fahrkarte gültig ist, zusammen etwa mit dem Bereich, in dem Fahrten erlaubt sind. Dadurch kann berührungslos ermittelt werden, welche Gültigkeit eine vom System erfasste Karte aufweist. Die Übertragung der Information kann durch Technologien wie Transponder etc., welche Stand der Technik sind (erwähnt u.a. in DE 20202616), bewerkstelligt werden.

Es wird bevorzugt, dass die Zentraleinheit aufgrund der Gültigkeitsinformation das Leitmittel so steuert, dass Personen von einem nicht gestatteten räumlichen Bereich weggeführt bzw. davon ferngehalten werden. Dies ist vor Allem nützlich für eine Art Zugangskontrolle, also etwa das Sperren eines Stadionbereichs, nachdem die maximal vorgesehene Anzahl Besucher den Bereich betreten hat. Ab diesem Zeitpunkt kann dann etwa mit dem Leitmittel angezeigt werden, dass dieser Bereich belegt ist, und die Besucher werden dann in andere, noch freie Bereiche umgeleitet.

Es wird weiterhin bevorzugt, dass Steuerbefehle für Lichtanlagen oder Anzeigetafeln jeder Art generiert werden, wie auch die automatische Generierung von Lautsprecherdurchsagen bzw. Hinweisen an Personen, die Durchsagen auf herkömmliche, manuelle Art vornehmen sollen. Insbesondere ist bevorzugt, dass oben genannte Eigenschaften zur Sicherung des öffentlichen Raumes und von Verkehrssystemen vor terroristischen Anschlägen beitragen.

Es wird bevorzugt, dass die Empfangseinrichtungen ein Überschreiten der Zeitspanne, der Fahrtreichweite oder -strecke bzw. ein Eintreten in einen nicht erlaubten räumlichen Bereich erfassen können, und die Zentraleinheit eine Meldung über die erfolgte Überschreitung ausgeben kann. Dies ermöglicht eine Erfassung von Schwarzfahrern in einem Schienenfahrzeug, aber auch von Personen, die möglicherweise irrtümlich oder absichtlich einen gesperrten Bereich betreten haben. Der Betreiber des Systems kann dann in geeigneter Weise darauf reagieren. Es wird weiterhin bevorzugt, dass das erfindungsgemäße Leitsystem automatisch Alarm auslöst und / oder Maßnahmen einleitet.

Es wird bevorzugt, dass die Zentraleinheit aus Position, Geschwindigkeit und/oder Bewegungsrichtung ein Bewegungsmuster von Personen ermitteln kann, und aufgrund dieses Bewegungsmusters das Leitmittel steuern oder eine Meldung über das Auftreten eines bestimmten Bewegungsmusters ausgeben kann. Ungewöhnliche oder als problematisch bekannte Bewegungsmuster können frühzeitig erkannt und mittels der Steuerung kann darauf reagiert werden bzw. Alarm ausgelöst werden. Wenn beispielsweise eine große Menge an Personen sich nicht oder nur langsam in Richtung eines einlaufenden Zugs bewegt, sich aber eine einzelne Person sehr schnell auf den Zug zu bewegt, dann könnte dies etwa auf einen Selbstmordversuch schließen lassen, und über die Steuerung ein Bremsen des Zugs bewirkt werden. Wenn dagegen etwa eine Person einen Koffer mit sich führt, der Koffer aber dann stehen gelassen wird, während sich die Person entfernt, kann dies auf das Deponieren einer Bombe schließen lassen. Eine Evakuierung des Bereichs kann veranlasst werden, ebenso wie etwa das automatische Einspielen der entsprechenden Aufnahmen einer Videoüberwachungsanlage, zur Kontrolle durch das Personal.

Erfindungsgemäß ist bevorzugt, dass das System beispielsweise einen mit Fahrgästen besetzten Zug ggf. automatisch so steuert, dass er nicht mehr in eine Station einfährt, in der ein Koffer einzeln durch das Videosystem aufgefunden wurde oder andere Alarmgründe vorherrschen. Andererseits kann bevorzugt sein, einen leeren Zug zur schnellen Evakuierung von Personen über den Bahnsteig einfahren zu lassen, wenn der o.g. Koffer oder ein anderer Alarmgrund örtlich beispielsweise im Bereich der Zugangswege zum Bahnsteig oder dem zu evakuierenden Bereich aufgefunden wurde. Sofern es möglich ist, etwa Gepäckstücke ähnlich wie die Fahrkarten erfindungsgemäß mit Sendern auszustatten, etwa in den Frachtanhängern bei Flugzeugen, können Gepäckstücke ganz analog den Personen verfolgt werden.

Es wird bevorzugt, dass das Leitmittel optische Leitmittel, akustische Leitmittel, Absperr- bzw. Freigabemittel, Fahrtreppen, Transportbänder, Fahrstühle oder Steuermittel für Fahrzeuge, insbesondere schienengebundene, umfasst. Optische Leitmittel können etwa variable Leuchtschilder, Signalleuchten und dergleichen sein. Darunter fallen auch Ampeln, sowohl für Fahrzeuge als auch Personen. Akustische Leitmittel werden in der Regel Lautsprecher und Ähnliches sein. Inbegriffen sind auch Lautsprecheranlagen mit automatischen Durchsagen, die auf Fahrgastinformationsrechnern oder andernorts abgelegt sind. Unter Absperr- und Freigabemitteln sind etwa steuerbare Schranken, z.B. Personendrehschranken zu verstehen. Diese und die weiteren genannten Mittel können durch das erfindungsgemäße System in vorteilhafter Weise gesteuert werden, um die beschriebenen Vorteile zu erreichen. Ein Teil dieser Mittel ist in jedem Verkehrssystem bereits vorhanden und kann, sofern sie von der Zentraleinheit steuerbar sind, im Rahmen des erfindungsgemäßen Systems genutzt werden.

Schienengebundene Fahrzeuge sind natürlich bevorzugt, da sie am leichtesten in eine gewünschte Richtung gelenkt werden können, etwa durch Stellen von Weichen. Das System kann in oder an die Steuerung von automatischen Zugsystemen gefügt sein, es kann so konzipiert sein, dass es in die Zugsteuerung oder Verkehrsmittelsteuerung eingreift, insbesondere in das "Dispatching", d.h. die Steuerung des Zug- und Verkehrsmitteleinsatzes. Darin inbegriffen sind Zugeinsatz hinsichtlich Länge der Züge oder Größe der Verkehrmitteleinheiten, der Frequenz, der befahrenen Linien und Richtungen sowie Zugziele. Es kann der Steuerung der Beschleunigung oder Verzögerung der Verkehrsmittel dienen. Unter "Zügen" sind schienengebundene ober- oder unterirdische Bahnen wie U- oder Straßenbahnen zu verstehen, die Erfindung kann aber ebenso in Verbindung mit Bussen und anderen Fahrzeugen genutzt werden. Sie kann auch zur Erleichterung der Personenleitung und zur Verbesserung der Sicherheit z.B. in Flughäfen dienen.

Bevorzugt ist das Verkehrsleitsystem so ausgebildet, dass eine Datenkommunikation mit der Steuerung des Verkehrsmittels stattfindet , so dass bei Bedarf Verkehrsmitteleinheiten pro Zeiteinheit hinzugegeben oder aus dem System genommen werden können. Ferner ist es bevorzugt, dass das Verkehrsleitsystem bei automatischer Steuerung des Verkehrsmittels diese Verstärkung oder Verringerung automatisch (ohne Zutun von Personen) vornehmen kann.

Bevorzugt sind die Verkehrssysteme offene Systeme und/oder weisen Mischverkehr auf. Geschlossene Verkehrssysteme sind etwa Metros, Seilbahnen oder Magnetbahnen, mit einer definierten Anzahl Verkehrsmittel auf einer für andere Verkehrsmittel unzugänglichen Fahrstrecke. Offene bzw. Systeme mit Mischverkehr (wie etwa gemeinsam genutzte Straßen für Trams und Autos/LKW) weisen dagegen auch Verkehrswege auf, die für verschiedene Verkehrsmittel (auch Individualverkehr) zugänglich sind, und wobei keine definierte Anzahl von Verkehrsmitteln auf der Verkehrswegen verkehrt. Damit kann diese Ausführungsform auch in offenen Systemen und/oder solche mit Mischverkehr zur Erhöhung von Betriebseffizienz und Sicherheit genutzt werden.

Bevorzugt sind weiter Mittel zur Hinderniserkennung vom Verkehrsmittel aus und von Standorten außerhalb der Verkehrswege (z.B. entlang der Fahrstrecke bis hin zu einem Satelliten) vorgesehen, zur Erweiterung der fahrzeugstandortgebundenen Einsehbarkeitsgrenzen und dem Erkennen im dreidimensionalen Raum, wobei die Mittel zur Hinderniserkennung funktional und Steuerbefehle generierend mit der Betriebssteuerung des Verkehrssystems verbunden sind. Mit dieser Ausführungsform können die Grenzen menschlicher Wahrnehmung in Zusammenhang mit der Steuerung von Verkehrsmitteln erweitert werden, d.h. Hindernisse können erkannt werden, bevor ein Fahrzeugführer sie normalerweise erkennen kann bzw. auch wenn sie für den Fahrzeugführer prinzipiell nicht einsehbar sind (hinter Kurven etc.).

Weitere Vorteile, Merkmale und Anwendungsmöglichkeiten der Erfindung ergeben sich aus der nachfolgenden Beschreibung von Ausführungsbeispielen in Verbindung mit der Zeichnung.
Fig. 1 zeigt eine schematische Darstellung einer ersten Ausführungsform des erfindungsgemäßen Systems.
Fig. 2 zeigt eine schematische Darstellung einer zweiten Ausführungsform des erfindungsgemäßen Systems.
Fig. 3 zeigt eine schematische Darstellung einer dritten Ausführungsform des erfindungsgemäßen Systems.
Fig. 4 zeigt schematisch die am meisten bevorzugte Ausführungsform des erfindungsgemäßen Systems.
Fig. 5 zeigt schematisch eine typische Anwendung des erfindungsgemäßen Systems.
Fig. 6 zeigt schematisch eine Ausführungsform des erfindungsgemäßen Systems.
Fig. 7a, 7b und 7c zeigen drei Varianten einer Leitung von Fahrgästen an einem Bahnsteig, gemäß der Erfindung.
Fig. 8 stellt eine Ausführungsform einer erfindungsgemäßen Fahrkarte dar.
Fig. 9 zeigt eine Einsatzsituation des Systems der Erfindung.
Fig. 10 zeigt eine weitere Ausführungsform der Erfindung.
Fig. 11 zeigt eine weitere Ausführungsform, die die Möglichkeiten erläutert, die das erfindungsgemäße System zur automatischen Fahrwegsicherung vorsieht.
Fig. 12 zeigt eine bevorzugte, weitere Ausführungsform.
Fig. 13 zeigt eine bevorzugte, weitere Ausführungsform.

Im Folgenden werden die bereits besprochenen sowie weitere Merkmale und Vorteile der Erfindung erläutert, anhand von Anwendungen, die als nicht beschränkende Beispiele gegeben werden.

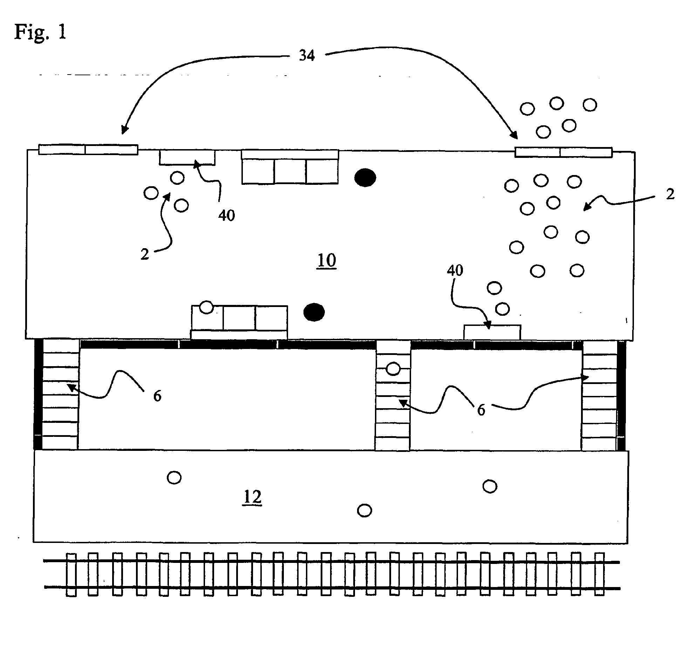

Eine einfache Ausführungsform der Erfindung ist in Fig. 1 gezeigt. Der Bahnhof weist einen Aufenthaltsbereich 10 auf, also etwa eine Vorhalle, sowie einen Bahnsteig 12. Von außen führen Türen 34 rechts und links in den Bahnhof. Fahrgäste sind als Kreise 2 dargestellt. Von dem Vorraum 10 führen drei Rolltreppen 6 auf den Bahnsteig 12. Mehrere Fahrkartenautomaten 40 sind in dem Bahnhof aufgestellt. Fahrkartenautomaten 40 können natürlich ebenso in einem Fahrzeug, also U-Bahnzug oder dergleichen, angebracht sein (nicht gezeigt). Wenn ein Fahrgast eine Fahrkarte an einem Automaten erwirbt, kann das erfindungsgemäße Leitsystem erkennen, dass sich eine Person im Bereich dieses Automaten befindet. Weiterhin kann es aufgrund von Informationen über die Fahrkarte, die der Automat liefert, erkennen, wohin der Fahrgast fahren möchte. Dies kann unterschiedlich genau erfolgen, je nach den Informationen aus der Fahrkarte. In einem einfachen Fall wären dies beispielsweise eine Fahrtreichweite, etwa 3 Ringe, 4 Stationen, oder ein Bereich (Tarifzone). In einer weiteren Variante könnte die Fahrkarte spezifischer sein, also das Fahrtziel explizit angeben. Das System kann aus diesen Fahrtzieldaten schließen, dass der Fahrgast voraussichtlich an einen Ort möchte, der je nach der Art der Fahrtzieldaten mehr oder weniger genau bekannt ist. Der Stand der Technik US 4,092,718 führt dies für nicht spurgeführte Fahrzeuge teilweise aus, wobei die generierten Anweisungen dort an die Fahrer der Fahrzeuge gehen, aber keine automatischen fahrerlosen Fahrten auslösen oder steuern können. Aus den Informationen über eine Vielzahl von Fahrgästen ergibt sich daher ein Bild der Personenzahl, die sich in bestimmten Bereichen aufhalten und voraussichtlich in andere Bereiche fahren möchten. Das System ermöglicht dem Verkehrsbetreiber, auf veränderte Bedingungen angemessen zu reagieren, beispielsweise zusätzliche Züge einzusetzen, wenn eine große Zahl von Personen zur gleichen Zeit Fahrkarten für ein bestimmtes Ziel erwirbt, also bei einer Großveranstaltung, im Feierabendverkehr oder beim Ausfall anderer Verkehrssysteme des Verbunds, beispielsweise dem Ausfall bestimmter Streckenabschnitte, so dass die Fahrgäste eine Ausweichroute nehmen. Erfindungsgemäß geschieht dies vorzugsweise vollautomatisch.

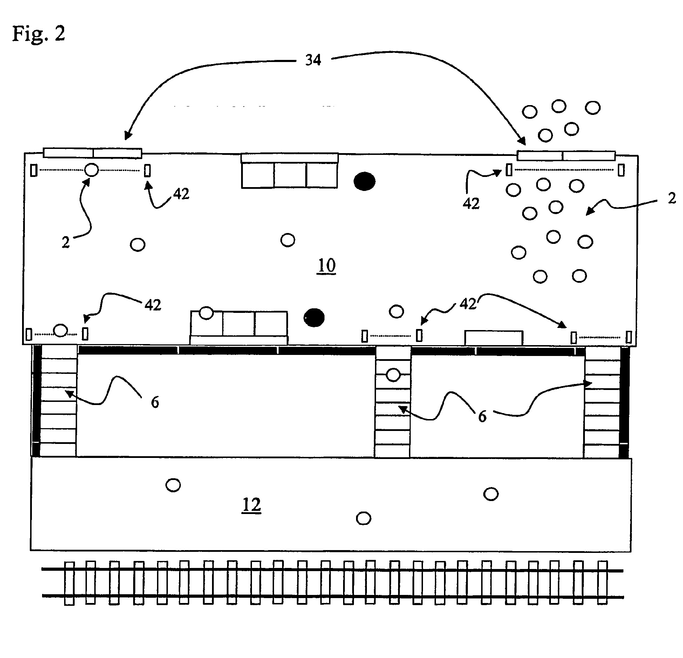

Eine andere Ausführungsform der Erfindung ist in Fig. 2 gezeigt. Ein Bahnhof wie in Fig. 2 ist hier mit Zugangskontrollen 42 ausgestattet, die Personen beim Ein- bzw. Ausgang in bzw. aus bestimmten Bereichen (Vorhalle, Bahnsteig) erfassen und zählen können. Dabei sind die Zugangskontrolleinrichtungen 42 bevorzugt im Bereich von Türen, Rolltreppenzugängen etc. angeordnet. Dies kann beispielsweise mit Lichtschranken, aber auch anderen Vorrichtungen erreicht werden, etwa durch Leuchtplatten, die von darüber gehenden Personen abgedeckt werden, so dass Lichtsensoren in der Decke die Verdunkelung messen und daraus auf die Zahl der Personen rückschließen können.

Daneben können in gleichwertiger Weise Infrarotsensoren, Bewegungsmelder, Lichtschranken, Zählsensoren, eine computergesteuerte Videobildauswertung von Überwachungskameras oder extra dafür installierten Kameras (Videobildabstraktion etc.) zur Gewinnung dieser Informationen eingesetzt werden. Die Richtung, d.h. ob eine Person in den Bahnhof geht oder ihn verlässt, kann durch geeignete Ausführungen der Zugangskontrollen erreicht werden (Doppellichtschranken, nur in eine Richtung passierbare Sperren und dergleichen). Eine personenscharfe Erfassung ist mit geeigneten Vorrichtungen etwa unter Verwendung personalisierter Fahrkarten mit RFID-Chips zu erreichen. Es soll dabei angemerkt werden, dass erfindungsgemäß Zugangskontrollen ebenso derartige Vorrichtungen beinhalten können, die nicht primär zur Zugangskontrolle dienen, beispielsweise Vorrichtungen, die einen Übergang von Personen zwischen verschiedenen Abschnitten des gleichen Bahnsteigs erfassen sollen, ergänzend zu Vorrichtungen, die das Betreten des Bahnhofs erfassen. Der Einfachheit halber seien solche Vorrichtungen unter dem Begriff Zugangskontrollen zusammengefasst. Solche Vorrichtungen, etwa Lichtschranken, können günstig erworben und eingebaut werden, der Aufstellort kann sehr flexibel gewählt werden, und Fahrgastströme werden dadurch in keiner Weise behindert.

Auch die automatische Auswertung (durch Bildverarbeitung, Abstraktion etc.) von Videobildern soll vorzugsweise für die Datengewinnung herangezogen werden. Kameras und Datenleitungen fallen bei einer erhöhten Überwachung und der Notwendigkeit dazu in Verkehrseinrichtungen ohnehin an. Dabei kann sowohl die Infrastruktur, also die Gebäude zur Füllung und Leerung der Verkehrsmittel wie auch das Verkehrsmittel selbst Überwachungseinrichtungen, die gleichzeitig Zähl- und Gefahrerkennungseinrichtungen sind, besitzen, wobei die zeitnahe (Online-) Übertragung über Funkschnittstellen, Infrarotschnittstellen, Wireless LAN oder ähnliche Übertragungstechnologien Bestandteil des hier dargestellten Systems sind. Eine andere Möglichkeit für Zugangskontrolleinrichtungen, die allerdings eine mehr oder weniger große Behinderung großer Personenströme darstellen, wären schrankenähnliche Vorrichtungen oder Türen, die sich erst nach dem Einführen einer gültigen Fahrkarte für den Passagier öffnen. Andererseits bieten solche Absperr/Freigabevorrichtungen eine genauere Steuerungsmöglichkeit für den Verkehrsbetreiber (Absperren von Bahnhöfen nach Betriebsschluss etc.). Der Vollständigkeit halber sein angemerkt, dass bestimmte Smartcard - Systeme und berührungslose bzw. "Touchless" Systeme Stand der Technik sind, welche möglicherweise auch die Bewegungsrichtung des Karteninhabers erkennen können. Des Weiteren kann durch mehrere Sensoren im Raum, d.h. durch die geometrische Anordnung von Empfängern und die Bewegung des jeweiligen Senders in Relation dazu, eine Erkennung der Bewegungsrichtung und die Generierung eines entsprechenden Datenimpulses, der diese Richtung an die Steuerung des Systems weitergibt, erzeugt werden. Ergänzend sei bemerkt, dass sich das System vorzugsweise abweichend vom Stand der Technik, insbesondere beispielsweise US 4,092,718, seine für die erfindungsgemäßen Funktionen erforderlichen Daten unabhängig vom Zutun der Passagiere selbst einholt, um funktionsfähig zu sein, Eingaben von Passagieren in Automaten, sofern sie im Stand der Technik bekannt sein, aber zusätzlich nützt, wenn sie für die Funktion dienlich sind oder die Funktionsergebnisse verfeinern können.

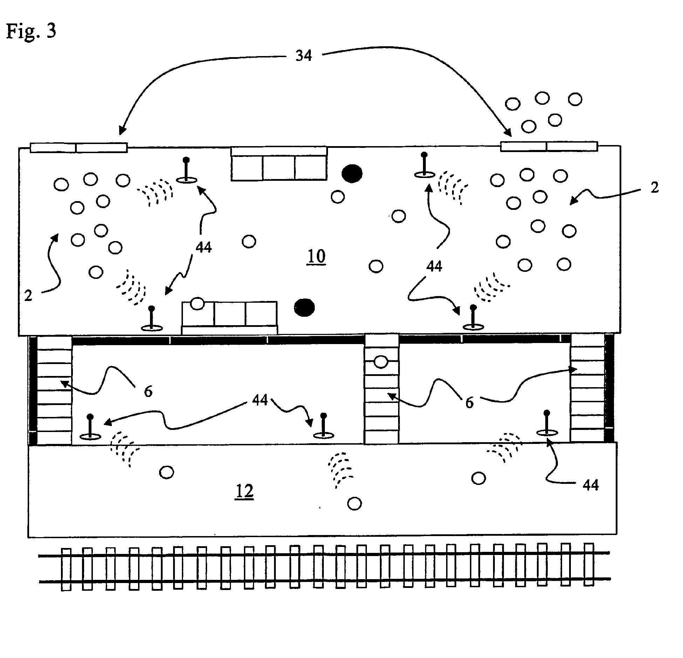

Eine besonders bevorzugte Ausführungsform des erfindungsgemäßen Systems in einem Bahnhof ist in Fig. 3 gezeigt. Der Bahnhof weist einen Aufenthaltsbereich 10 auf, also etwa eine Vorhalle, sowie den Bahnsteig 12. Von außen führen Türen 34 rechts und links in den Bahnhof. Fahrgäste sind als Kreise 2 dargestellt. Von dem Vorraum 10 führen drei Rolltreppen 6 auf den Bahnsteig 12. Mehrere Empfangseinrichtungen 44 sind in dem Bahnhof verteilt aufgestellt, um die Signale der von den Fahrgästen 2 mitgeführten Sender (nicht gezeigt) zu empfangen. Empfangseinrichtungen 44 können natürlich ebenso in einem Fahrzeug, also U-Bahnzug oder dergleichen, angebracht sein (nicht gezeigt). Die (beschränkten) Empfangsbereiche der Empfangseinrichtungen 44, die mehr oder weniger überlappen können, bilden eine Art Zellensystem vergleichbar den Mobilfunksystemen. Mit Techniken, die aus dem gleichen Bereich bekannt sind, kann daher die Position eines persönlichen Senders eines Fahrgasts je nach Anforderung mehr oder weniger genau ermittelt werden (Aufenthalt in einer Zelle oder Bestimmen der Position durch Messen der Empfangsstärke des Signals in mehreren Zellen). In dem hier gezeigten Beispiel betritt eine große Anzahl von Personen 2 den Bahnhof, die auf der rechten Seite dargestellt ist. Das System wird diese große Anzahl sowie deren Bewegungsrichtung erfassen, daraus schließen, dass die Menschen auf den Bahnsteig wollen, und Maßnahmen treffen, damit die Fahrgäste nicht alle in den rechten Bereich des Bahnsteigs gelangen.

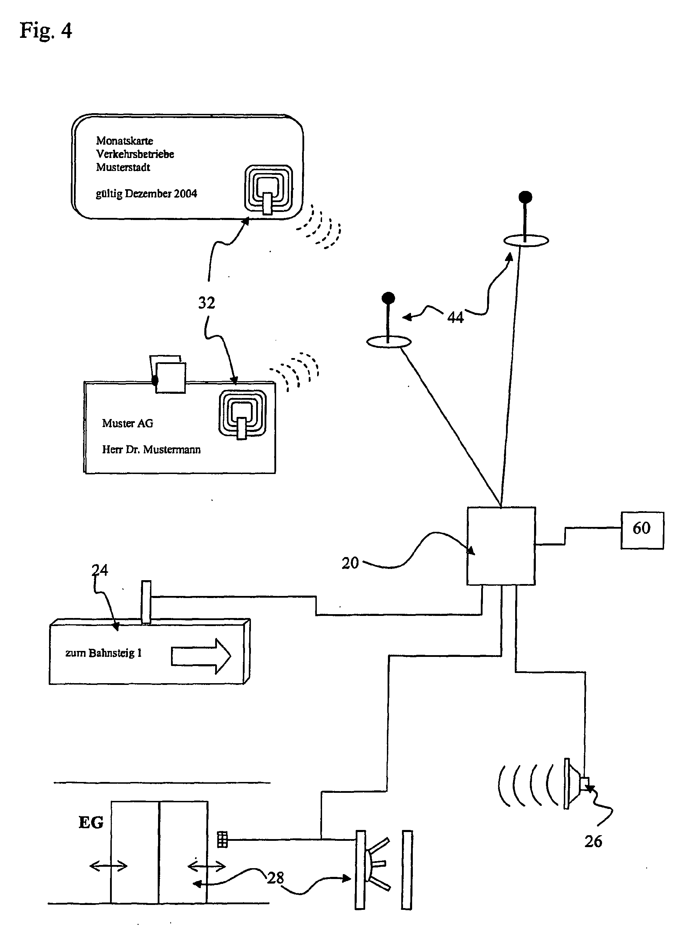

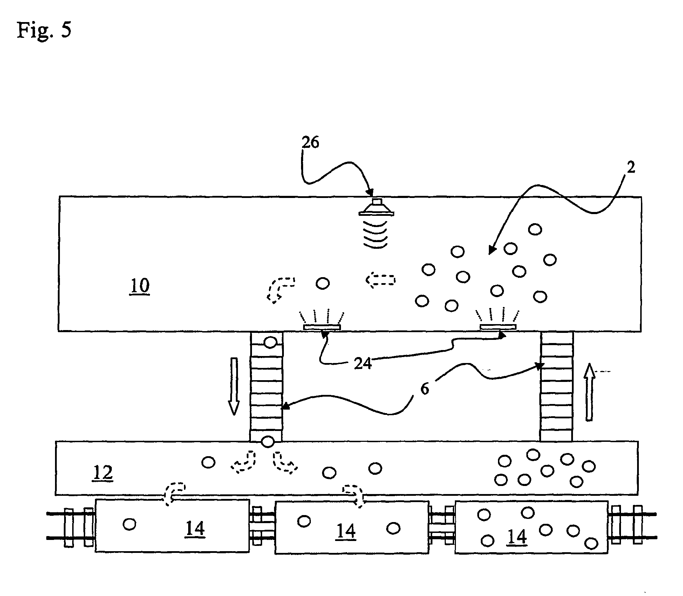

Dazu kann die rechte Rolltreppe 6 abgeschaltet oder zumindest stark verlangsamt oder sogar in umgekehrter Richtung gefahren werden, während die mittlere auf höchster Geschwindigkeit gefahren wird. Dies verhindert, dass viele oder sogar alle Fahrgäste über die rechte Rolltreppe 6 auf den Bahnsteig 12 gelangen und diesen Bereich möglicherweise überfüllen. Somit wird eine bessere Verteilung der Menschen auf dem Bahnsteig erreicht. Wenn in dem gezeigten Fall gleichzeitig ein vollbesetzter Zug einfährt, dann stellt sich weiterhin das Problem, die aussteigenden Fahrgäste möglichst von denen, die einsteigen wollen, zu trennen, um ein Gedränge und daher einen Zeitverlust zu vermeiden. Wenn das System also wie hier erkennt, dass auf der rechten Seite eine große Anzahl Menschen auf den Bahnsteig strömt, dann kann die linke Rolltreppe 6 in Richtung vom Bahnsteig 12 zum Vorraum 10 gefahren werden, und mit optischen und/oder akustischen Leitmitteln (hier nicht gezeigt, siehe dazu Fig. 4 und 5) können die aussteigenden Fahrgäste in Richtung des linken Ausgangs des Bahnhofs geleitet werden. Dadurch wird eine Kollision zwischen aussteigenden und einsteigenden Fahrgästen wirkungsvoll verhindert, der Zug kann schneller wieder abfahren und eine größere Personenzahl wird in der gleichen Zeitspanne befördert.

In Fig. 4 ist eine weitere Ausführungsform der Erfindung schematisch gezeigt. Das System umfasst mehrere Sender 32, hier in zwei verschiedenen Gegenständen integriert (Fahrkarte bzw. Namensschild), mehrere Empfangseinrichtungen 44, sowie eine Zentraleinheit 20. Die Zentraleinheit 20 ist mit den Empfangseinrichtungen 44 verbunden. An die Zentraleinheit 20 können verschiedene Leitelemente angeschlossen sein, in dem hier gezeigten Beispiel sind dies optische Anzeigemittel, also etwa eine Leuchttafel 24 mit steuerbarer Anzeige, akustische Leitmittel 26, etwa ein Durchsagelautsprecher, sowie mechanische Absperr- bzw. Freigabeelemente 28, z.B. elektrisch gesteuerte Durchgangs- oder Aufzugtüren oder eine verriegelbare Durchgangssperre, und insbesondere Steuermittel 60 für Verkehrsmittel, also beispielsweise die steuerbaren Weichen und/oder Signaleinrichtungen eines U-Bahn-Schienensystems. Die Sender 32 können RFID-Chips sein. Dabei ist zu beachten, dass die Empfangseinrichtungen 44 für gewöhnlich auch eine Sendefähigkeit aufweisen, um die in der Regel passiven RFID-Chips zu aktivieren, so dass diese ihre entsprechende Kennung aussenden. Die Verbindung der Zentraleinheit 20 mit den Empfangseinrichtungen 44 und Leitmitteln 24, 26, 28 kann sowohl drahtgebunden als auch drahtlos sein. Über den Zentralrechner werden die entsprechenden Fahrzeugkapazitäten erfindungsgemäß in der erforderlichen Länge, Raumkapazität und Fahrtenfrequenz beigeliefert.

Das gezeigte System bietet vielfältige Möglichkeiten, Personen oder Personenströme zu leiten und zu lenken. Im Folgenden sei dies für ein Bahn- oder U-Bahnsystem beschrieben, es kommen jedoch viele weitere Anwendungen in Betracht, wie andere Massenverkehrsmittel, Freizeitparks, Tiefgaragen usw. So kann beispielsweise am Tage einer Großveranstaltung das System so angesteuert werden, dass die Fahrgäste bevorzugt zu dem Ort der Veranstaltung geleitet werden. Durch Leuchtschilder und Lautsprecherdurchsagen können die Fahrgäste auf die kürzesten Verkehrswege zu diesem Ort gelenkt werden. Sie können in einem Bahnhof auch zu den Zügen geleitet werden, die die Massen zu einer Veranstaltung an- oder abtransportieren. Dies ist vor allem bei komplexen Kreuzungsbahnhöfen mehrerer U-Bahnlinien in verschiedenen Ebenen vorteilhaft, wie sie beispielsweise in London, Paris, Moskau, Tokio oder München anzutreffen sind. Eine optimale, d.h. möglichst gleichmäßige Besetzung der Züge kann mit dem System erreicht werden.

Dazu wird erfasst, ob sich in einem Einstiegs- oder Zugbereich mehr Menschen befinden, in anderen dagegen weniger. Dann wird anhand dieser Information das System so angesteuert, dass Zugänge zu den bereits vollen oder überfüllten Bereichen bevorzugt abgesperrt werden, während die Menschen in Richtung der noch leeren Bereiche gelenkt werden. Zusätzlich ist dies mit der automatischen Bereitstellung von Zugkapazitäten verknüpft. Mit der erfindungsgemäßen Auslegung des Systems ist ein effizientes Störfallmanagement für Massenverkehrssysteme möglich. Passagiere werden im Störfall, zum Beispiel wegen einer aufgrund von Alarm gesperrten Linie oder einem gesperrten Bahnhof, effizient zu anderen Linien umgeleitet, deren Kapazität automatisch erhöht, oder die automatisch auf eine alternative Fahrstrecke umgeleitet wird, und dazu hilfsweise effizient verteilt und geleitet. Dies kann durch optische Anzeigen erfolgen, durch akustische Hinweise, oder es können die entsprechenden Zugangswege abgesperrt oder zumindest weniger gut durchgängig gemacht werden. Wenn ein Bahnsteig beispielsweise Zugänge über 3 Rolltreppen aufweist, vorne, mittig und hinten, dann können die Rolltreppen derart gesteuert werden, dass ein erwünschter Personenstrom bzw. eine Verteilung der Fahrgäste erreicht wird. In dem Fall, dass der vordere Bahnsteigsbereich bereits überfüllt ist, wird das System dies erkennen, und beispielsweise die zu diesem Bereich führende Rolltreppe abschalten oder in die entgegengesetzte Richtung laufen lassen. Dadurch werden die Passagiere dazu gebracht, die zwei weiteren Rolltreppen zu benutzen, und eine weitere Überfüllung des vorderen Bahnsteigsbereichs wird wirkungsvoll verhindert. Analoges gilt für Aufzüge, automatische Türen und dergleichen, die selektiv abgesperrt oder geöffnet werden können.

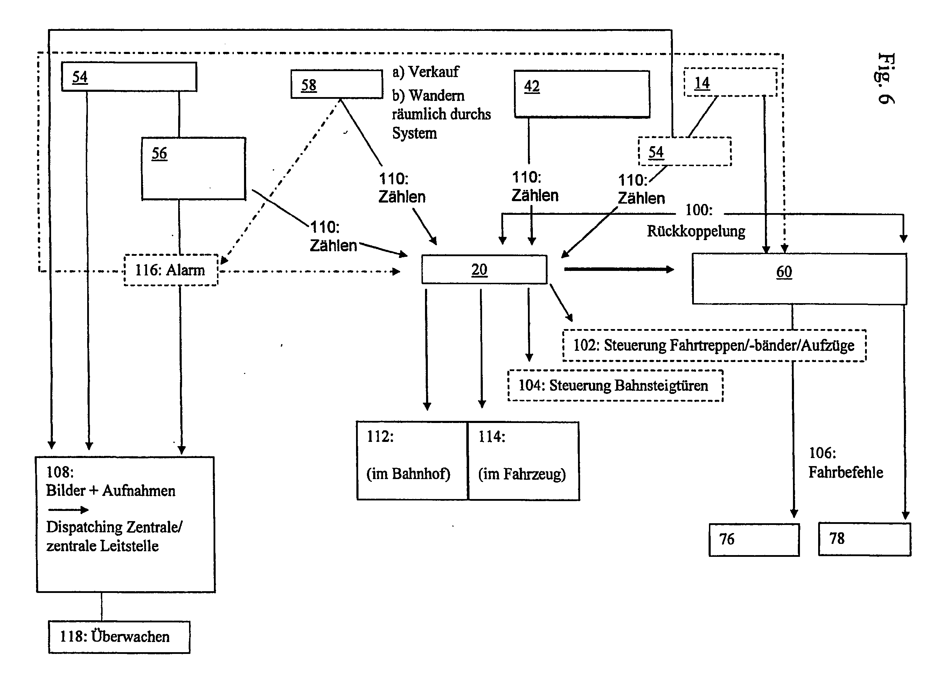

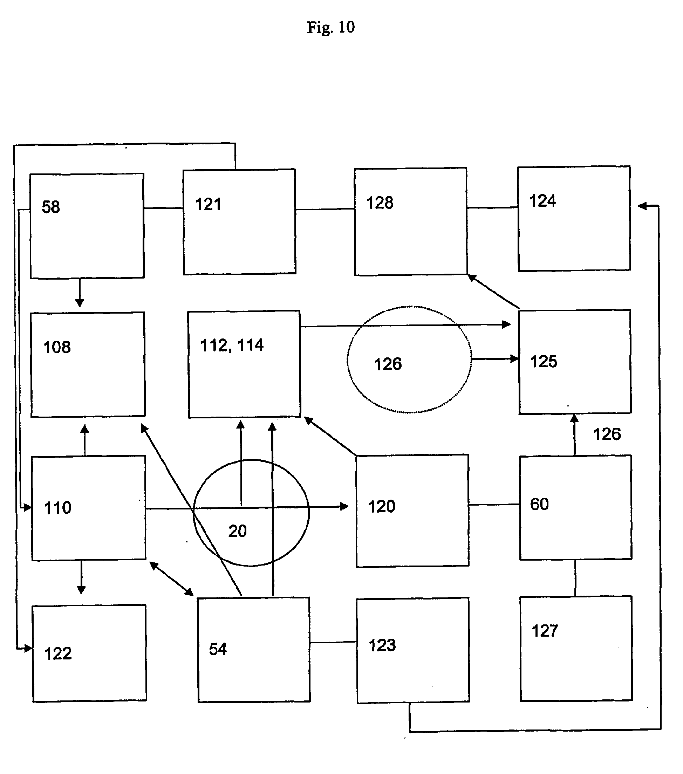

Bei Rolltreppen, Fahrstühlen oder Transportbändern kann dazu sowohl die Richtung umgekehrt werden, um zu verhindern, dass zu viele Personen das Band in einer nicht erwünschten Richtung benutzen, als auch die Geschwindigkeit dieser Vorrichtungen angepasst werden. Wenn ein Bereich schnell geräumt werden soll, beispielsweise weil ein voll besetzter Zug angekommen ist, oder eine Evakuierung erfolgen soll, können die Transportmittel beschleunigt werden. Soll dagegen eine bereits bestehende Überfüllung eines Bereichs nicht noch weiter verstärkt werden, können die Transportmittel verlangsamt werden, so dass den Menschen Zeit gegeben wird, sich gleichmäßiger zu verteilen. Zusätzlich wird erfindungsgemäß das gesamte Kapazitätsmanagement eines komplexen Verkehrssystems automatisch vorgenommen oder die damit betrauten Verantwortlichen effektiv und zeitsparend unterstützt (siehe dazu auch Fig. 6 und 10).

In Figur 5 ist eine Situation dargestellt, in der das erfindungsgemäße System helfen kann, eine gleichmäßige Verteilung von Fahrgästen auf einem Bahnsteig 12 und in einem Zug 14 zu erreichen. Wie hier zu sehen ist der Zug 14 in dem ersten Wagen bereits gut besetzt, und weiter steht eine große Anzahl Fahrgäste 2 bereit zum Einsteigen in diesem Bereich. Das System der Erfindung erkennt nun diesen Zustand und schaltet die Rolltreppe, die zu dem überfüllten Bereich führt, in die Laufrichtung zum Bahnhofsbereich 10, also weg vom Bahnsteig 12. Die Personen, die im Bahnhofsbereich 10 in Richtung des Zugs gehen und normalerweise einfach die am nächsten liegende Rolltreppe benutzen würden, werden daher auf diese Weise geleitet, um die andere Rolltreppe, die zum Bahnsteig 12 führt, zu benutzen. Mit gestrichelten Pfeilen ist die gewünschte Bewegungsrichtung der Fahrgäste angedeutet. Natürlich wird der gewünschte Effekt nicht nur durch die Laufrichtung der Rolltreppen bewirkt, die Fahrgäste sollen erfindungsgemäß weiterhin mit optischen und akustischen Leitmitteln 24, 26 in die gewünschte Richtung gelenkt werden. Also vor allem etwa durch variabel ansteuerbare Leuchtschilder bzw. Anzeigetafeln, aber optional ebenso durch entsprechende automatische Lautsprecheransagen.

Dabei können auch sehbehinderte Personen berücksichtigt werden, z.B. kann solchen Personen der Weg in eine bestimmte Richtung analog den mit akustischen Signalgebern ausgerüsteten Ampeln gewiesen werden. Der Eingang zu einer Rolltreppe kann etwa damit ausgerüstet werden, um zu verhindern, dass eine sehbehinderte Person eine in der falschen Laufrichtung fahrende Rolltreppe irrtümlich betritt. In der am meisten bevorzugten Ausführungsform kann einer solchen Person eine entsprechende Kennung auf ihrer personengebundenen Fahrkarte bereitgestellt werden, so dass das System erkennt, wenn sich die Person einer falsch herum laufenden Treppe etc. nähert.

Fig. 6 illustriert in einem Gesamtschema eine bevorzugte Ausführungsform des erfindungsgemäßen Systems. In dieser Figur ist eine Kombination verschiedener Einzelkomponenten dargestellt, die bereits beschrieben wurden. Fig. 6 zeigt, wie eine Vielfalt von Einzelmaßnahmen zu einem Gesamtsystem kombiniert werden kann, um die aus der Zählung 110 gewonnenen Daten zusammen mit Zusatzinformationen, etwa aus der Videoüberwachung 54/computergesteuerten Bildverarbeitung 56 für die Überwachung 118, Leitung 112, 114 von Personen und Steuerung 106, 76, 78 von Verkehrsmitteln 14 durch eine Zentraleinheit 20 zu verwenden. Die Steuerung erfolgt über die Zentraleinheit 20, mittels eines Steuermittels 60. Dabei kann es sich bei der Steuerung um eine Verdopplung (zusätzliche Wagen anhängen), Abkupplung oder Änderung der Linienführung (Weichen stellen etc.) handeln, 76, oder es können die Fahrzeuge gesteuert werden, d.h. vor allem Geschwindigkeit verringern, erhöhen und dergleichen, je nach Ausführung des Fahrzeugs sogar automatisches Fahren inklusive Lenken. Die Bezugsziffer 112 steht für sektorale Leitbefehle (an die Fahrgäste) im Bahnhof, während 114 sektorale Leitbefehle innerhalb der Fahrzeuge darstellt. Solche sektoralen Leitbefehle können mittels automatischer Lautsprecherdurchsagen, Bilder, gesteuerte farbige Böden, Decken, Wände etc., durch den Einsatz von Licht(vorhängen), Zugzielanzeigern ZZA sowie andere Anzeigen gegeben werden. Die Zentraleinheit 20 steuert aufgrund der eingehenden Daten auch Fahrtreppen/- Bänder und Aufzüge, 102, sowie etwa Bahnsteigtüren, 104. Die gestrichelten Linien stellen die sicherheitsrelevanten Funktionen dar, die bei problematischen Situationen Alarm auslösen können, 116, und welche die technische Infrastruktur der Leitfunktionen mitnutzen. Bilder und Aufzeichnungen der Videoüberwachung werden der Dispatching - Zentrale bzw. einer zentralen Leitstelle zugeführt, 108. Eine Überwachung 118 kann dann automatisch, aber auch durch Personal erfolgen. Die Zählung 110 erfolgt in diesem Diagramm an Eingangsbereichen mittels Zugangskontrollvorrichtungen 42, auch in Fahrzeugen 14, etwa durch Videoüberwachung 54, bevorzugt aber ebenso durch das Wandern der Sender in den Fahrkarten 58 durchs System, b), bzw. beim Kauf einer Fahrkarte 58 an einem Automaten, a). Durch ständige Rückkoppelung 100 wird die Wirkung einer Maßnahme im System ständig überwacht. Hier nicht gezeigt ist, dass selbstverständlich eine Eingriffsmöglichkeit von Personal, in das System, also vor allem die Zentraleinheit 20, beibehalten werden kann.

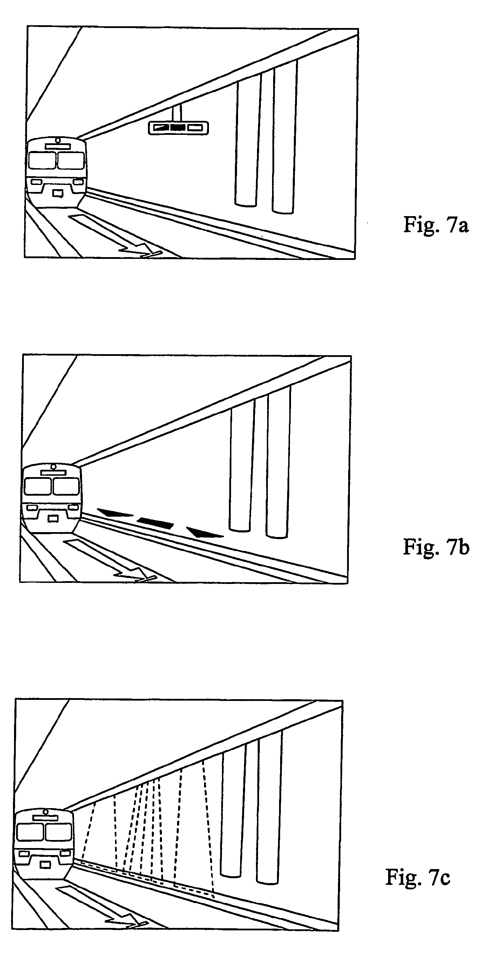

In den Fig. 7a, 7b und 7c sind drei Varianten der Leitung von Personen auf einem Bahnsteig gezeigt. Dabei ist hier speziell die Leitung von Personen gezeigt, um eine optimale Besetzung von Fahrzeugen zu erreichen. Aufgrund der erfindungsgemäß gewonnenen Daten über Personendichten in bestimmen Bereichen sollen die Menschen so geleitet werden, dass sie bevorzugt in weniger stark besetzte Fahrzeugteile gehen. In Fig. 7a wird dies durch entsprechende Anzeigen, etwa Leuchtschilder, oder Displays der verschiedenen Technologien, z.B. LED, LCD, TFT, Plasma u.a., erreicht. Fig. 7b zeigt dazu im Boden vorgesehen Leuchtfelder, entweder durch Form (Pfeil/Balken) oder durch verschiedenfarbige Felder (etwa rot/grün). Fig. 7c stellt die Verwendung von Lichtvorhängen für diesen Zweck dar, etwa durch verschiedenfarbige Lichtvorhänge oder das gezielte Ein-/Ausschalten einzelner Segmente. Die Lichtvorhänge können linear an der Bahnsteigkante vorkommen oder auch eine bestimmte Fläche des Bahnsteiges von oben oder schräg oben her ausleuchten.

Fig. 8 zeigt, wie eine Fahrkarte für das erfindungsgemäße System mit einem Magnetstreifen 50 sowie einem "Pad" 52 ausgerüstet sein kann. Das Pad 52 dient dazu, einen Fingerabdruck des Käufers der Karte aufzunehmen, so dass diese biometrischen Daten später überprüft werden können, d.h. ob der Träger auch der ursprüngliche Käufer der Karte ist. Dies kann etwa dadurch geschehen, dass der Käufer beim Bedienen der Fahrkarte dazu veranlasst wird, den Daumen in dem "Pad" 52 aufzulegen. Der Magnetstreifen 50 kann für die Aufnahme verschiedener Daten dienen, er ist von einer herkömmlichen Art und soll daher nicht weitergehend beschrieben werden. Die erfindungsgemäße Funktion des 1:1-Abgleichs in der Karte und die damit gegebene Zugangsberechtigung, d.h. z.B. Entsperren einer Sperre oder Personenvereinzelungsanlage kann auch berührungslos, z.B. mit Transpondertechnologie, Funk etc. erfolgen. Dabei kann der Stand der Technik genutzt werden. Denkbar ist, dass das jeweilige Kontrollgerät an der Zugangssperre auch so viel Energie oder Impulse aussendet, dass die Karte mit ihren Funktionen angeregt wird und ohne eigene Energieversorgung auskommt.

Fig. 9 zeigt eine typische Einsatzsituation des Systems gemäß der Erfindung zum Leiten der Fahrgäste an einem Bahnsteig, um eine optimale Belegung von Fahrzeugen und reduzierte Haltezeiten zu erreichen. In diesem Beispiel sind akustische Mittel aufgezeigt, es können aber auch optische Mittel oder eine Kombination beider Mittel sein.

In Fig. 10 ist ein Aspekt des erfindungsgemäßen Systems dargestellt.

Dabei werden die Ergebnisse der automatischen Fahrgastzählung 110 als wesentliches Element in der Rechnereinheit 20 verarbeitet, um über die verkehrsaufkommensabhängige Dispatcherfunktion 120 an die Systemsteuerung automatisches Fahren 60 (in der Beschreibung der weiteren Figuren unter "Leitmittel" subsumiert) gekoppelt zu werden, und um Befehle respektive Leitbefehle an die automatische System- und Zugsteuerung auszulösen.

Das Kernsystem in der Reihe 110, 20, 120, 60 wird durch ankombinierte Teilsysteme (dazu kann auch das Personenleitsystem gemäß EP 941527 B1 gehören) effizienter, auch wenn es ohne diese funktionsfähig ist. Durch angehängte Überwachungssysteme 54 und 108 kann die Sicherheit des Verkehrssystems drastisch erhöht werden, was insbesondere angesichts der Bedrohungen von öffentlichen Massenverkehrssystemen bevorzugt ist. Neu im Sinne der Erfindung ist dabei der Aspekt der automatischen Überwachung der Bahnhöfe und Züge (u.a. über bekannte elektronische Erkennungssysteme der intelligenten Verarbeitung digitaler Kamerabilder), und bevorzugt die Kombination auch dieser Erkennungsinstrumente mit der Zugsteuerung.

Für die automatische Zählung können verschiedene Mittel eingesetzt werden, wie Lichtschranken, Gewichtsvergleich, Radar- und Infrarotmessung, aber auch Videobilder (B4 54), die durch ein dahinter geschaltetes Programm zu Zähldaten verarbeitet werden. Diese Bilder dienen aber auch der Erhöhung der Sicherheit und der Prävention on Straftaten im Verkehrssystem (108). In Verbindung mit der oben beschriebenen Kombination von Funktionen wird auch die erfindungsgemäße Mehrfachverwendbarkeit von IT-Infrastruktur (Datenleitung wie Endgeräten) eingesetzt.

Zähldaten können auch zur Abrechnung verwendet werden, sowohl als entfernungsabhängige Abrechnung in Verbindung mit biometrischen Kartensysteme 58 mit geeignetem Ausgabeterminal 121 gegenüber den Fahrgästen / Passagieren, als auch unter den Betreibern der Verkehrsmittel selbst, wenn mehrere Firmen den Service des Verkehrssystems - wirtschaftliche unabhängig voneinander - anbieten respektive betreiben (Abrechnungssoftware für Fahrgeldeinnahmeverteilung 122).

Videobilder können für Strafverfolgung, Durchsetzung der Gesetze und für Studienzwecke aufgezeichnet (Aufzeichnungsmedien für Strafverfolgung und für spätere Planung 123) werden - eine Löschung nach einer gewissen Zeitperiode kann von Gesetzes wegen angezeigt sein (124). Karten und Biometrie können die Sicherheit ebenfalls erhöhen respektive für bestimmte Personen (z.B. verdächtige Personen im terroristischen Umfeld) den Zugang überhaupt verwehren (121 in Verbindung mit 58).

Passagierleitsysteme gem. EP 0 941 527 B1 (Rauch) sind an das erfindungsgemäße System ebenso ankoppelbar (hierzu gehören Leitmittel wie 112 und 114), wie Fahrgastinformationssysteme (125), wobei eine eigene Positionsbestimmung dazu ebenso ausreichen kann (über z.B. GPS 126) wie die des Zugsteuerungssystems (60).

Das Zugsteuerungssystem (60) ist an das (automatische) Dispatchingsystem 120 unmittelbar angeschlossen, es kann ohne menschliches Zutun damit kombiniert werden, sofern die technischen Aufsichtsbehörden zustimmen.

Das erfindungsgemäße System kann, bei einem großen insbesondere spurgeführten Verkehrssystem für das ganze System ausgelegt werden, aber auch nur für einen (zum Beispiel stark frequentierten) Teil. Um einen funktionalen Übergang herzustellen, sind login-Bereiche in das System vorgesehen, in denen sich der Fahrer eines Zuges oder auch ein automatischer fahrerloser Zug in das System hinein anmeldet oder aus ihm wieder abmeldet (127). Sowohl die Kartenausgabe über biometrische Kontrolle 121 als auch das Fahrgastinformationssystem 125 sind an System zur Erhöhung der Servicequalität 128 für den Fahrgast angeschlossen, oder steuern diese sogar automatisch, wobei die Informationswege von den Kartenautomaten 121 bidirektional sind, und Informationen des Fahrgastinformationssystems 125 nicht nur über große Displays am Bahnhof und in den Zügen, sondern auch im Display des Automaten bereits erscheinen können und so ggf. die Wahl des Reisezieles zum Nutzen des Fahrgasts beeinflussen können.

Das vorstehend Beschriebene gilt im Rahmen der Erfindung natürlich nicht nur lokal für einzelne Bahnhöfe, und ist in analoger Weise anstatt auf Personen auch auf die Fahrzeuge für deren Beförderung anzuwenden. Es kann ebenso für ein System mehrerer Bahnhöfe beispielsweise einer Großstadt angewendet werden. Wird in einem Bahnhof oder auf einer bestimmten Strecke eine Überlastung oder Störung erfasst, kann das Leitsystem so angesteuert werden, dass die Fahrgäste möglichst gleichmäßig auf Ausweichstrecken verteilt werden, d.h. etwa durch Einsatz der Leitelemente auf die entsprechenden Bahnsteige geleitet werden, und dass von Seiten der Fahrzeuge her auf die erkannte Situation reagiert wird. Die Erfindung ermöglicht dem Verkehrsbetreiber in jedem Augenblick, einen Überblick über die derzeitige Auslastung des Verbundsystems mit Fahrgästen zu erhalten, und Maßnahmen zur Behebung oder vorzeitigen Verhinderung von Störungen, Stauungen etc. zu treffen, also den Einsatz zusätzlicher Züge vorzusehen oder automatisch auszulösen, und allgemein die Steuerung von Fahrzeugen an die ermittelten Daten anzupassen, um einen möglichst effektiven Transport der Personen zu erreichen. Im Gegensatz zu Personen, die nur in begrenzter Weise "gesteuert" werden können, kann in die Steuerung von Fahrzeugen, natürlich insbesondere von automatisch gesteuerten, direkt durch das System eingegriffen werden. So können etwa automatisch zusätzliche (fahrerlose) Züge ins Verkehrsnetz eingeschleust werden, wenn dies benötigt wird. Aber auch bei nicht vollautomatisch gesteuerten Fahrzeugen können Eingriffe vorgesehen werden, etwa das automatische Bremsen beim Erkennen einer drohenden Gefahrensituation, hier kann aber auch genügen, den Fahrer rechtzeitig über die Gefahrensituation zu informieren.

Vorteilhaft ist, dass jeder Fahrgast mit dem Fahrticket einen Sender oder Chip in der Karte integriert erhält, sei es nun eine Jahres-, Monats, Wochen- oder Tageskarte oder ein Mehrfahrten- oder Einzelfahrschein. Der Sender kann in eine Plastikkarte integriert oder auch als Drahtwerk in eine bedruckbare festere Pappkarte integriert sein. Auch andere Materialien sind denkbar, wenn sie für die Funktion dienlich sind. Weiterhin kann der Sender in vergleichbaren Karten oder anderen mitgeführten Gegenständen integriert sein, etwa Zugangskarten, Namensschildern und dergleichen. Die enthaltene Kennung des Senders muss in jedem Fall innerhalb eines Systems eindeutig sein, um eine personenscharfe Zählung zu ermöglichen. Es besteht die Möglichkeit, den Sender mit einer Identifikation auszustatten, die einen Rückschluss auf den Träger zulässt. Eine eindeutige Zuordnung wäre beispielsweise mittels einer Kundennummer bei dem entsprechenden Verkehrsbetrieb denkbar, im Falle von (nicht übertragbaren) Abonnement-Fahrkarten. Gleiches kann für Dauerkarten/Saisontickets für Zoos, Freizeitparks, Stadien etc. angewendet werden. In diesem Fall wäre der Träger nur von dem jeweiligen Betreiber identifizierbar, Dritte hätten keine Möglichkeit der Identifizierung. Es können eindeutige Kennungen verwendet werden, die eine Identifizierung erlauben, etwa Ausweisnummern oder den Namen des Trägers. Die Identifikation kann bestehenden oder künftigen Datenschutzbestimmungen entsprechend ausgelegt werden. Eine personenscharfe Zählung ist in jedem Fall möglich.

Jede ausgegebene Fahrkarte - auch für nur eine Fahrt - erhält einen kleinen Sender (die Kosten dafür sind bei großen Stückzahlen extrem gering). Ein-Fahrten-Karten können beim Verlassen des Verkehrsmittels auch wieder eingezogen werden, Mehrfahrtenkarten bei Verlassen z. B. des Untergrundbahnhofes (Sperrenbereichs) nach der letzten Fahrt, d.h. bei Erlöschen der Gültigkeit. Dies ist bereits Stand der Technik beim heutigen Kartensystem der Untergrundbahn von London. Eine solche Vorgehensweise erlaubt somit das Wiederverwenden von in der Anschaffung aufwendigeren Karten mit deren Sendern, Pads etc., die immer wieder neu programmiert werden können.

In der bevorzugten Ausführungsform umfasst das erfindungsgemäße System eine Vielzahl persönlicher Sender (etwa in Form von "smart cards"). Dabei wird den Benutzern des Systems bevorzugt mittels Fahrkarte ein persönlicher Sender zur Verfügung gestellt, der eine personenscharfe Zählung gewährleistet. Dazu sind Empfangseinrichtungen in beispielsweise Fahrzeugen und Bahnhöfen vorgesehen. In optionalen Ausführungen kann der persönliche Sender in Verbindung mit den verwendeten Empfangseinrichtungen auch zur genauen Ortung von Personen eingesetzt werden, dies kann optional entweder "anonymisiert" oder personalisiert erfolgen. Die Daten (Personenzah1, Aufenthaltsorte), die durch den Einsatz der persönlichen Sender erfasst werden können, werden für vielfältige Funktionen des Verkehrsleitsystems ausgewertet und verwendet, um eine Anpassung des Leitsystems an unterschiedlichste Bedingungen zeitnah zu ermöglichen. Die Sender dienen der automatischen Kapazitätsplanung und -Auslösung im Verkehrssystem wie auch zur Wahrung der Sicherheit.

Ziel der vorliegenden Erfindung ist es, ein System bereitzustellen, das die vorhergehend genannten Anwendungen optimal miteinander verknüpft, günstig herzustellen und zu erwerben ist, und ein hohes Maß an Genauigkeit bietet. Bevorzugt ist es mit dem Fahrscheinerwerb oder dergleichen verknüpft oder bildet sogar eine Einheit damit. Schließlich dient es der Erfassung von Fahrgastmengen für Zwecke der Kontrolle, der Sicherheit, der Abrechung, der Fahrzeugdisposition und der Ermittlung von Eingangsdaten zur Steuerung des Verkehrssystems. Die örtliche Lage des von jeder Person mit sich geführten Senders kann mittels in Fahrzeugen und Räumen installierten Empfängervorrichtungen festgestellt und über ein Rechenprogramm visualisiert und für weitere Zwecke verwendet werden.

Ein derartiges System kann zur Zählung am Eingang zu einer Metrostation verwendet werden, aber auch beim Ausgang, es kann zur Fahrgeldnacherhebung bei zu weitem Fahren herangezogen werden (etwa wenn ein Fahrgast den Bereich verlässt, für den die Fahrkarte gültig ist), aber auch zum Zählen der Personen auf einem Bahnsteig, an einer Zugtür oder in einem Zugteil verwendet werden, sowie zur Zeichnung eines genauen Bilds der Aufenthaltsorte von Personen auf einem Bahnsteig oder in einem Fahrzeug. Es versetzt den Betreiber in die Lage, Fahrgastströme nachvollziehen bzw. verfolgen zu können, und es zeichnet zu jedem Zeitpunkt ein Bild der sich im System aufhaltenden Personen nach Zeit und Ort auf. Dieses Bild existiert so lange, bis die Personen das System, d.h. z.B. den Metrobahnhof, verlassen, oder solange im Katastrophenfall keine Temperaturen oder anderen Bedingungen entstehen, so dass das Fahrgastzähl- und Erkennungssystem nicht mehr funktionsfähig ist (in diesem Falle erfolgt eine Konservierung des letzten Messergebnisses). In Katastrophenfällen soll es aber so weit noch funktionsfähig sein, - dies soll für die meisten Fälle gewährleistet werden - um zur Ortung von Personen verwendet zu werden. Die mitgeführten Karten können, sofern sie über aktive Sendefähigkeiten verfügen, steigende Temperaturen erfassen und ein Warnsignal abgeben, so dass Brände möglichst frühzeitig erkannt werden können.

Eine Verwendung des hier offenbarten Systems für Gebäudeschutz und Schutz von Personen z.B. im Brandfalle in Tiefgaragen oder Gebäuden mit mehreren Brandabschnitten ist hierbei ebenso inbegriffen. Beispielsweise können bei automatischen Brandschutztorsteuerungen, die im Brandfall die Brandschutztore automatisch abschließen, Personen geortet werden, die sich noch in einem Brandabschnitt befinden, und vor dem Eingeschlossenwerden durch die Anlage bewahrt werden. Auch kann kontrolliert werden, ob sie eine von Hand zu betätigende Fluchttür, die evtl. mit dem Brandschutztor kombiniert ist, noch benützt haben oder benützen konnten.

Eine genaue Erfassung der Personenanzahl, die sich beispielsweise in einem bestimmten Tribünenbereich eines Sportstadions, oder im Garderoben-, VIP- oder sonstigem Bereich befindet, kann ebenfalls gewährleistet werden. Dies kann unter anderem genutzt werden, um zu verhindern, dass sich mehr Personen in einem bestimmten Bereich aufhalten, als es aus brandschutztechnischen (Konzertsaal) oder statischen (Fußballtribüne) Gründen tolerierbar ist.

Dabei kann bei personalisierten Karten die Erhebung auch personalisiert werden, sie kann aber ebenso auch nicht-personalisiert ablaufen. Eine Datenfilterung, wie sie evtl. vom Datenschutz gefordert wird, kann vor-, nach- oder zugeschaltet werden. Es ist auf jeden Fall erforderlich, dass jede Karte bzw. jeder Sender insofern individuell ist, dass eine Unterscheidung verschiedener Personen möglich ist. Eine Personalisierung, bei der personenbezogene Daten von dem Sender abrufbar sind (Kundennummer etc.) ist optional möglich. Bei Zeitkarten ist es notwendig, die Karten derart zu kodieren, dass über die Kennung eine Zuordnung zu den Zeitabschnitten der Gültigkeit möglich wird. D.h. um festzustellen, ob ein Fahrgast eine gültige oder bereits abgelaufene Fahrkarte besitzt. Dazu kann eine datumsbezogene Kennung verwendet werden.

Erfindungsgemäß ist vorgesehen, dass Daten (insbesondere personenbezogene Daten) nach gewisser Zeit gelöscht werden, gemäß der im Bereich des Verkehrsmittelbetreibers gültigen gesetzlichen Vorschriften, ggf. gemäß überregionaler oder internationaler Übereinkünfte. Die Einhaltung soll der Betreiber gewährleisten - ggf. können die technischen Möglichkeiten die Einsatzmöglichkeiten aus juristischer Sicht übersteigen, oder alle technischen Möglichkeiten werden nur in besonderen Fällen oder bei besonderen Vorkommnissen ausgeschöpft.

Wenn ein Fahrzeug, also etwa ein U-Bahnzug, eine Lagebestimmung vornehmen kann, ist dabei auch der Ort bekannt. Diese Information kann von Wichtigkeit sein, etwa im Falle eines Stromausfalls, eines Tunnelbrandes oder eines terroristischen Anschlages. Mit Systemen des Stands der Technik ist es jedoch nicht möglich, die Position jeder Person in einem Tunnelsystem von einem anderen Ort aus festzustellen (z.B. über elektronische Mittel), oder auch eine Person oder Karte zu orten, die sich nicht mehr bewegt (Karte kann auch liegen geblieben oder weg geworfen worden sein). Bei der bevorzugten Ausführungsform der Erfindung in Kombination mit den persönlichen Sendern ist der Zusatz einer Ortsbestimmung eines Fahrzeugs erforderlich, da sich die Empfangseinrichtungen unter anderem in einem Zug befinden können, der seine Position beim Fahren ändert. Um die genaue Position von bestimmten Personen zu ermitteln, die sich in einem Zug befinden, ist daher nicht nur die Positionsbestimmung in Bezug auf die Empfangseinrichtungen nötig, sondern zusätzlich die Information, wo sich der entsprechende Zug aufhält. Mit dieser kombinierten Information ist die Position der Fahrgäste dann insgesamt bekannt. Die Positionsbestimmung eines Zugs kann mit bekannten Mitteln erfolgen. Die Ortsbestimmung kann verfeinert werden, z.B. durch Aufteilen des Schienensystems in entsprechend kleine Abschnitte und Erfassen, wenn ein bestimmter Zug sich in einem bestimmten Abschnitt aufhält und in welche Richtung er fährt.

Mit der vorliegenden Erfindung sind unter anderem folgende Ausführungsformen realisierbar:
Beim Einsatz in einem Massenverkehrssystem, etwa einem U-Bahnsystem: Mit dem erfindungsgemäßen System kann eine bessere Ausnutzung der vorhandenen Züge sowie des Raums in einzelnen Zügen erreicht werden. Indirekt wird dabei auch eine bessere Infrastrukturausnutzung gewährleistet. Wenn ein erhöhter Fahrgastandrang in einem Bereich eines Zuges beim Einsteigen erfasst wird, können die Fahrgäste mit den Elementen des Leitsystems zu den anderen, weniger frequentierten Türen geleitet werden. Das System kann das erhöhte Fahrgastaufkommen registrieren und automatisch veranlassen, mehr Züge vorzuhalten, außerdem kann der vergrößerte Personenstrom schon im Vorfeld so geleitet werden, dass starkes Gedränge in vermieden werden kann. Da die Passagiere bevorzugt bereits so früh erfasst werden (also etwa bereits im Bahnhofseingang bzw. -vorhof), dass noch einige Minuten vergehen, bis sie einstiegsfertig am Bahnsteig bereitstehen, können in dieser Zeit mehr Züge bereitgestellt werden, so dass die höhere Personenzahl schnellstmöglich aus dem Bahnhof transportiert werden kann. Dabei werden die Passagiere über den Einsatz von Zusatzzügen informiert, so dass sie davon absehen, unbedingt den ersten Zug zu nehmen. Eine optionale Möglichkeit besteht darin, Rolltreppen, Aufzüge etc. so zu schalten, dass der in einer Richtung kurzfristig erhöhte Personenstrom störungsfrei abgeführt werden kann. Das bedeutet, dass bei je einer Rolltreppe für den Zu- bzw. Abfluss vom Bahnsteig kurzfristig beide für den Zugang zum Bahnsteig geschaltet werden, wenn das System erkennt, dass viele Personen in Richtung des Bahnsteigs gehen, während keine oder nur wenige den Bahnsteig verlassen.

Beim Einsatz zur erhöhten Sicherheit bei statik-kritischen Bauten, beispielsweise einer Fußballtribüne: Abgesehen von der Zugangskontrolle kann die Erfindung dazu genutzt werden, eine zu hohe Belegung einer Tribüne zu erkennen, damit geeignete Maßnahmen gegen ein drohendes Konstruktionsversagen, im Extremfall sogar Zusammenstürzen ergriffen werden können. Selbiges gilt für Verkehrsbauwerke.

Beim Einsatz bei der Verbesserung von Rettungseinsätzen: Beim Auftreten von Katastrophen, etwa Bränden, kann das System verhindern, dass Personen versehentlich in die Gefahrenzone laufen, durch Einsatz der Elemente des Leitsystems, also Warnhinweisen auf Leuchtschildem, akustischen Meldungen, mechanischen Absperrungen von gefährdeten Bereichen etc. Der Personenstrom kann gezielt so geleitet werden, dass es möglichst zu keinen Stockungen kommt und ein ausreichender Sicherheitsabstand zu Brandherden eingehalten wird. Den Rettungskräften werden zusätzliche Informationen geliefert, beispielsweise, ob sich noch Personen in einem bestimmten Bereich aufhalten. Wenn ein bestimmter Sender innerhalb eines Gefahrenbereichs geortet wird, der sich nicht bewegt, kann daraus auf eine hilflose Person geschlossen und es können Maßnahmen ergriffen werden. Es ist bevorzugt, dass in einem Brandfall überprüft werden kann, ob alle das Gebäude verlassen haben bzw. sich in sicheren Bereichen aufhalten.

Beim Einsatz für die Gleisfreimeldung : Befinden sich Sender im Gleisraum, oder eine Person respektive ein Gegenstand, der durch dem Kamerasystem hinterlegte Intelligenz entdeckt wird, kann dies auf dort befindliche Personen oder Gegenstände Rückschlüsse erlauben und damit Alarm und/oder das Abbremsen herannahender Züge auslösen. Damit können beispielsweise die leider häufigen Selbstmordversuche oder Unfälle, d.h. durch Stürzen vor herannahende Züge, auch unbeabsichtigt, weitgehend verhindert werden. Eine Kombination bzw. Informationsdopplung zum Zwecke der Sicherheit mit Hilfe automatischer Videoüberwachungsgeräte/-Systeme etc. ist erfindungsgemäß inbegriffen.

Kamerastandorte können dabei sein:
am und im Fahrzeug
entlang der Strecke und in deren Umfeld
an Standorten mit erhöhtem Überblick (z.B. Satelliten)

Dabei kommt es nicht darauf an, ob die Bilder eigens für den erfindungsgemäßen Zweck angefertigt und gesendet werden oder ständig gesendete Bilder und Daten für den erfindungsgemäßen Zweck verwendet und entsprechend zweckgemäß verarbeitet werden.

Bilder der Strecke respektive des Fahrwege werden dazu mit intelligenter Verarbeitung (z.B. image processing) auf plötzliche und auffällige Veränderungen hin überwacht
a) vor Betriebsbeginn und/oder nach Betriebsende (bei schienengebundenen Systemen) durch ein langsames Fahrzeug, insbesondere Überprüfung auf Qualitätsveränderungen der Strecke, z.B. Verformungen, Risse etc.
b) während des Betriebs insbesondere Überprüfung auf Hindernisse jeder Art einen gewissen Zeitraum vor und (z.B. mit Kamera an Bord) unmittelbar vor Passieren des Streckenabschnitts mit hoher Geschwindigkeit.

Dabei ist eine Differenzierung der Bildverarbeitung erwünscht, da Veränderungen auch durch Tageslicht, Helligkeit, Dunkelheit, Schattenwurf, Schlagregen, Schneeflocken erfolgen.

Trotz der zu differenzierenden Veränderungen der Bildqualität ist das Erkennen auch kleiner Hindernisse von Wichtigkeit, um größere Sicherheit zu erreichen. Dazu dient u.a. räumliches Sehen, evtl. mit zwei parallelen Kameras, durch Hineinkombinieren photogrammetrischer Verfahren in den Bildverarbeitungsprozess.

Bei Verwendung von Bildern aus Satellitenübertragung können Bilder aus verschiedenen Blickwinkeln kombiniert und ausgewertet werden.
a) Kamera an Zugspitze, bei Metro, Hochgeschwindigkeitszug wie auch bei Magnetbahn
b) fest installierte Kameras entlang der Strecke wie auch im Tunnel, in den Bahnhöfen, Abstellanlagen, an den Weichen etc. und
c) Satellitenüberwachung

Ein bewegtes Bild von der Zugspitze / Fahrzeugspitze, ein oder mehrere Bilder der Strecke von außen, seitlich oder seitlich von oben, vorher und mit durchfahrendem Zug, und gegebenenfalls ein Satellitenbild werden durch intelligente Bildverarbeitung miteinander verschnitten - das Ergebnis wird analog zur bereits beschriebenen Personenüberwachung (z.B. im Bahnhof) dem zentralen Rechner übermittelt.

Der zentrale Rechner steuert dabei:
1.) Auslösen von Anfahrts-, Beschleunigungs-, Verzögerungs- und Bremsvorgängen
2.) Auslösen von Befehlen an System- und Gesamtsteuerung
3.) Auslösen von Alarm an ggf. andere(n) Stellen, wie Überwachungspersonal, Rettung, Katastrophenschutz etc., Aufzeichnungen für spätere Zwecke

Die Struktur einer (an die jeweilige bauliche Infrastruktur anzupassenden) Streckenüberwachung beinhaltet erfindungsgemäß beispielsweise
1.) Kameras im Tunnel: den gesamten Tunnel in Längsverlauf und Querschnitt, beide Fahrtrichtungen, überlappend abbildend
2.) Kameras an den Bahnsteigkanten oder Bahnsteigtüren (evtl. von Hauptstreckenüberwachung abgekoppeltes System, um den verschiedenen Geschwindigkeiten Rechnung zu tragen)
3.) Kameras in den Zugangsanlagen der Stationen
4.) Kameras entlang der Strecke
5.) Besondere Kameradichte an Brücken, Über- und Unterführungen, Überlagerung der Strecke mit anderen hochsensiblen Verkehrsachsen z.B. Autobahnen etc.
6.) Satellitenüberwachung der Strecke (für die oberirdische Überwachung der Strecke)
7.) Kameras an der Fahrzeugspitze, für 7a) Ersatz der Überwachung der Strecke durch den Fahrer bei automatischer, fahrerloser Fahrt, oder b) Unterstützung des Fahrers, für vorausschauende Sicht bei hoher Geschwindigkeit
8.) Wie 7.), aber zur Überprüfung der Streckenqualität, Streckenebenheit usw. Kameras im Zug, zur Fahrgastsicherheit, gegen
9a.) Gewalt von Fahrgästen gegen Fahrgäste
9b.) Vandalismus
9c.) Terrorismus (Taschen, Koffer etc.)

Zugangsüberwachung kann ergänzt werden evtl. durch Röntgengeräte, Sprengstoffdetektoren etc.

Zu überwachende Parameter sind dabei:
Intrusion, also unerlaubtes Betreten durch Personen oder andere Lebewesen
   - Gegenstände auf der Fahrbahn
   - Gegenstände im Lichtraumprofil
   - Gegenstände an Tunnelwänden und -decken
   - Gegenstände an Tunnelwänden und Decken, hineinfallende Gegenstände
   - Gegenstände am und im Fahrzeug
   - Auffälliges Verhalten von Personen
      gesuchte Personen, die das Verkehrsmittel nutzen

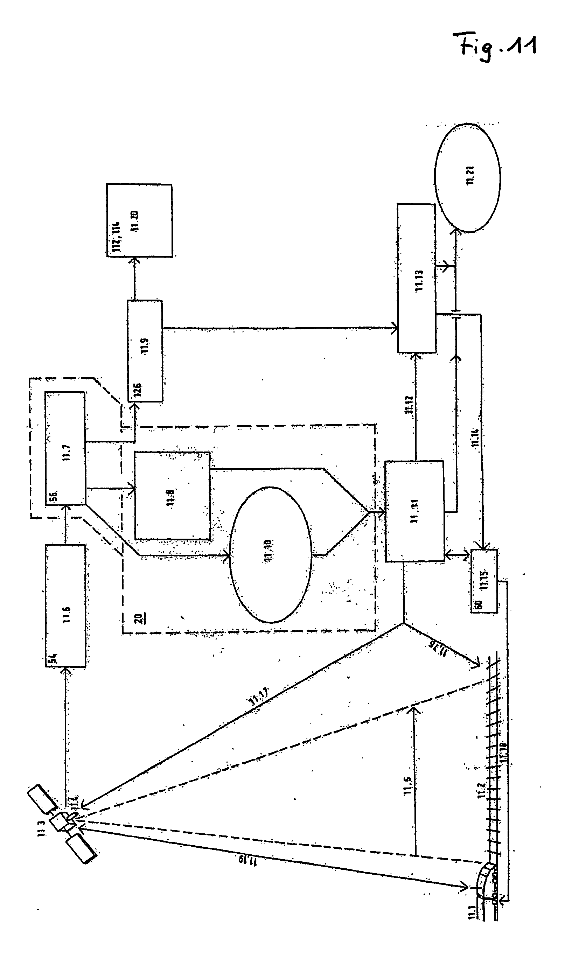

Fig. 11 zeigt dieses oben beschriebene erfindungsgemäße Teilsystem zur Überwachung, am Beispiel des Kamerastandortes Satellit. Das Schema gilt für andere Kamerastandorte ebenfalls, sowohl für bewegliche Standorte wie auch eine Vielzahl hintereinander kombinierter Standorte.

Ein Fahrzeug 11.1, im hier dargestellten Beispiel ein Zug, befindet sich auf und durchfährt eine Fahrtstrecke 11.2., auch Fahrweg, im hier gezeigten Beispiel eine Schienenstrecke, aber auch Magnetbahn, Straße, Autobahn, vorzugsweise mit definiertem Verlauf oder spurgeführt. Von der Fahrstrecke abgesetzte, diese aber überblickende Kameras 11.4., beispielsweise auf einem Satelliten 11.3., stehen in ständigem Datenkontakt 11.19 mit dem Fahrzeug. Die Kameras 11.4. respektive ein Sender z.B. Satellit 11.3. übermittelt die Daten 11.6. (54) der vom Fahrzeug in nächster Zeit zu überfahrenden Fahrstrecke 11.5 an den Zentralrechner 20, wobei dieser eine automatische intelligente Bildverarbeitung 11.7. (56) inkorporiert oder diese ihm vorgeschaltet ist. Die Bildverarbeitung ist verknüpft mit einer Ortsbestimmung 11.9, z.B. GPS, denkbar aber auch Zugnummernmeldesysteme wie z.B. im Schienenverkehr bekannt oder andere Mittel zur genauen Ortsbestimmung von Fahrzeugen in Echtzeit. Die Bildverarbeitung und die dahintergeschaltete Rechnerintelligenz erlaubt das automatische Erkennen von Hindernissen 11.8., wobei vorzugsweise auch ein ständiger Vergleich der durch die kontinuierliche Kamerabeobachtung vorgefundenen Ist-Situation mit der Sol1-Situation stattfindet, so dass Veränderungen sofort erkannt werden. Die Datenlage und deren Verarbeitungsergebnisse führen im Störungsfalle des Fahrweges zu einer Reaktion 11.11., z.B. Zwangsbremsung bei Hindernissen, sowie zur Alarmauslösung 11.12 an die Betriebszentrale oder Kontrollstation 11.13. Automatisch oder durch Zutun von Personentscheidungen in der Betriebszentrale werden Steuerbefehle 11.14 generiert, welche die automatische Zugsteuerung 11.15 (60) beeinflussen bzw. steuern. Dabei kann direkt als Reaktion 11.11. ein Befehl 11.16 an die streckenseitige Kommunikation, Signaltechnik etc. ausgelöst werden, aber auch ein Befehl über die ständige Datenkommunikation über Satellit 11.17 und 11.19. Die Automatische Zugsteuerung 11.15 (60) kann auch mit bekannten Mitteln wie Balisen etc. über Strecke / Fahrzeug - Kommunikation 11.18 Steuerbefehle übertragen.

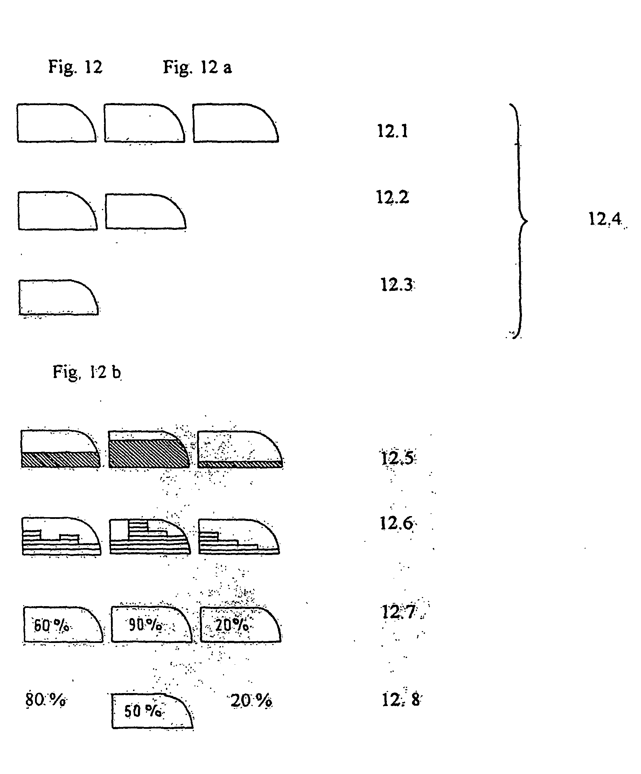

Fig. 12 zeigt eine weitere Ausführungsform, die erläutert, wie Füllungsgrade von Zügen den Fahrgästen mitgeteilt werden können und so ein entsprechendes Verhalten auf stark befüllten Bahnsteigen erreicht werden kann.

Zuglängen- und Zugpositionsanzeiger (in einem) wie in Fig. 12a markieren den Stand der Technik. Dabei beschreibt 12.1 einen Langzug, 12.2 einen Vollzug und 12.3 einen Kurzzug. 12.4. bedeutet, dass die Position insbesondere der 12.2. und 12.3. je nach Aufstellung relativ zum Bahnsteigverlauf variieren kann. Fig. 12 b zeigt bevorzugte Alternativen der Darstellung der Zugposition auf, die erfindungsgemäß zur effizienten Abwicklung des Fahrgastwechsels im Bahnhof eingesetzt werden können. Ihr Vorteil liegt dabei, dass dem Fahrgast der im ankommenden Zug zu erwartende Füllungsgrad bzw. die Verteilung der Fahrgäste in den einzelnen Wagen informativ gezeigt wird, ohne ihm eine zwangsmäßige Empfehlung zu geben. Das ist psychologisch besser und zeigt Vorteile in der Erfindung, dort wo es erforderlich ist, die Mitwirkung der zu befördernden Fahrgäste in Anspruch zu nehmen. 12.5. beschreibt dabei eine graphische Angabe des Füllungsgrades nach Einzelzug, 12.6. beschreibt den Füllungsgrad wagenscharf, da ein Einzelzug aus mehreren Wagen bestehen kann (theoretisch kann die bis zu "Türscharf" gehen), 12.7. gibt die jeweiligen % der Befüllung an. Ist in einem Kurzzug oder Einzelzug die Verteilung ungleich, kann die %-Zahl durchschnittlich angegeben werden (12.8.), wobei dies eine Variante ist, die weniger effizient im Sinne der Erfindung ist.

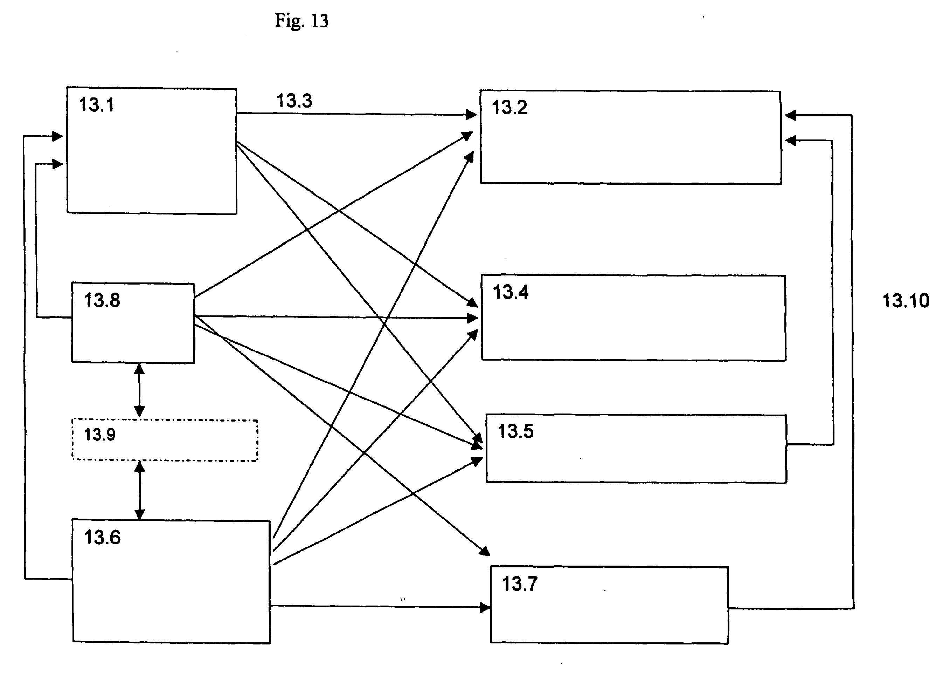

Fig. 13 beschreibt die verschiedenen Funktionen des erfindungsgemäßen Systems in ihren Zusammenhängen und erläutert zusammenfassend einzelne Aspekte an den Funktionsverknüpfungen zum Zwecke der Verbesserung von Effizienz und Sicherheit von Verkehrssystemen, insbesondere Massenverkehrssystemen. Mit verschiedenen Datenerfassungsmethoden erreicht man eine automatische Zählung von Passagieren 13.1. in einem System. Dies über ein biometrisches Kartensystem 13.8. oder über Videoüberwachung mit intelligenter Bildauswertung 13.6. zu machen, ist nur eine der bevorzugten Möglichkeiten, daneben gibt es Infrarot, Lichtschranken, Helligkeits- und Gewichtsvergleiche usw. Zunächst kann über die automatische Zählung die Fahrgastleitung zur effizienten Fahrgastverteilung und Fahrgastinformation gesteuert werden, wobei Teile dieser Funktion mit Ausnahme der Datengewinnung über 13.6 und 13.8. in EP 941 527 bereits offenbart sind. Dieser einzige bereits bekannte Strang, der in die Erfindung integriert sein kann, ist mit 13.3. bezeichnet.

Ein Aspekt der Erfindung liegt darin, dass über die gewonnene Erkenntnis über Anzahl und Verteilung der Passagiere im Verkehrssystem 13.1. auch Einfluss auf die automatische Zugsteuerung 13.4 und Einfluss auf die Fahrzeugeinsatzsteuerung 13.5. genommen wird. Erkenntnisse aus der Videoüberwachung, kombiniert mit intelligenter Bildverarbeitung 13.6., werden ebenfalls dazu verwendet, auf Zugsteuerung (siehe Fig. 11) und Einsatzplanung (sie Fig. 6) Einfluss auszuüben, d.h. Aktionen der Elemente 13.4 und 13.5. auszulösen, welche sich auf den Betrieb von Fahrzeugen im System, vorzugsweise den Zugbetrieb, positive Auswirkungen zur Verbesserung von Effizienz und Sicherheit haben. Daneben können die Elemente 13.8. und 13.6. auch Alarm und Sicherheitsfunktionen 13.7. auslösen, insbesondere, wenn Störungen des Betriebs des Verkehrssystems vorliegen oder Gegenstände oder Personen ins System eindringen, die ein Sicherheitsrisiko darstellen können. 13.6. und 13.8. kommunizieren dazu vorzugsweise mit einer (externen) Datenbank 13.9., die beispielsweise biometrische Daten gesuchter Personen vorhält, die man zur Vermeidung von Sicherheitsrisiken nicht im System haben will.

Wird Alarm ausgelöst 13.7. oder die Fahrzeugeinsatzplanung 13.5. erhöht oder verringert die Anzahl Fahrzeuge pro Zeiteinheit respektive die Teileanzahl der Fahrzeuge (z.B. längerer Zug) oder ändert die Linienführung, streicht Haltestellen usw., so wird dies auch zusätzlich zu den in der EP 941 527 offenbarten Funktionen und zusätzlich zu möglichen anderen Funktionen dem Fahrgastinformationssystem mitgeteilt (Verknüpfungen 13.10).

Der Sender zur Datenbefüllung des erfindungsgemäßen Leitsystems (respektive mehrere Sender) kann erfindungsgemäß in verschiedenen Gegenständen enthalten sein, die von entsprechenden Personen mitgeführt werden. Darunter fallen Fahr- und Eintrittskarten, Zugangskarten, Namensschilder und Ähnliches. Als Träger sind Kunststoffkarten oder auch Karten aus festen Karton geeignet, die Sender können darin gemäß bekannten Techniken integriert oder darauf angebracht werden. Als Sender können so genannte RFID-Chips, also per Funk auslesbare Etiketten verwendet werden. Dabei wird es sich in der Regel um passive Sender handeln, die keine eigene Stromversorgung benötigen, die Erfindung ist aber nicht auf passive Sender beschränkt. Darüber hinaus ist wie oben beschrieben erfindungsgemäß die Erkennung von Gegenständen und Personen im System inbegriffen, die keinen Sender mit sich tragen.

Die Genauigkeit einer Ortsbestimmung eines Senders oder eines senderlosen Gegenstandes / Person im erfindungsgemäßen System hängt unter anderem von der Art der Empfangsbereiche ab. Bei im Wesentlichen nicht überlappenden Empfangsbereichen (oder auch Zellen) wird eine Ortung darauf beschränkt sein, den Aufenthalt des Senders in bestimmen Bereichen festzustellen, die den Empfangsbereichen entsprechen. Daher wird in diesem Fall die Genauigkeit direkt von der Größe und Anzahl der Empfangsbereiche abhängen. Bei überlappenden Empfangsbereichen können bekannte Techniken analog zu den bei Mobilfunknetzen eingesetzt werden, vor allem anhand der Empfangsstärke des Signals eines Senders, um die Position des Senders noch genauer zu erfassen.

Zusätzlich zu der Erfassung, ob sich ein Sender bzw. wie viele Sender sich in einem Bereich befinden, können prinzipiell weitere wichtige Daten über Fahrgäste ermittelt werden. Wie bereits beschrieben kann die Position einzelner Personen erfasst und von dem System verwendet werden. Aus der Position bzw. deren Änderung mit der Zeit kann weiterhin auf die prinzipielle Richtung und grob auf die Geschwindigkeit einer Person geschlossen werden. Vor allem die Richtung ist eine überaus nützliche Information, die innerhalb des Systems der Erfindung sinnvoll genutzt werden kann. So ist es z.B. möglich, bei Personenströmen, die im Wesentlichen nur in eine Richtung verlaufen (aussteigende Fahrgäste verlassen einen Zug) mit dem Leitsystem eine bessere Ausnutzung von Rolltreppen etc. zu erreichen. Wenn erkannt wird, dass eine große Anzahl Menschen in eine bestimmte Richtung geht, können alle oder zumindest die meisten Rolltreppen in die entsprechende Richtung geschaltet werden, um eine schnellere Leerung eines Bahnsteigs zu erreichen. Analog können Aufzüge bevorzugt bereits im Vorhinein in eine entsprechende Etage gefahren werden, um Wartezeiten zu verkürzen, wenn absehbar viele Menschen auf einmal Aufzüge in die gleiche Richtung anfordern werden. Die Geschwindigkeit von Personen, die prinzipiell ermittelt werden kann, ist von untergeordneter Bedeutung und kann ohnehin nur grob ermittelt werden. Allerdings kann es durchaus vorteilhaft sein, darüber informiert zu sein, wie schnell sich eine größere Anzahl von Menschen bewegt, um etwa möglichst zeitnah Züge bereitzustellen, um zu große Ansammlungen wartender Fahrgäste zu vermeiden.

Es sei angemerkt, dass die in den Fig. 1 bis 3 beschriebenen Varianten der Erfindung erfindungsgemäß auch miteinander kombiniert werden können, wie etwa in Fig. 6 gezeigt. So können auch bei der am meisten bevorzugten Ausführungsform zusätzliche Daten von Fahrkartenautomaten und/oder Zugangskontrolleinrichtungen hinzugezogen werden, was ein noch differenzierteres Bild der Personenströme und Aufenthaltsdichten von Personen liefern kann. Ebenso wird eine größere Ausfallsicherheit erreicht, da eine Art "Backup"-Funktion dadurch ermöglicht wird, dass verschiedene unabhängige Untersysteme für die Positionsbestimmung von Personen verwendet werden, so dass bei Ausfall eines Untersystems andere weiter funktionsfähig bleiben. Alle denkbaren Kombinationen der beschriebenen Merkmale und Vorrichtungen können je nach Bedarf vorgesehen werden und bieten ein hohes Maß an Flexibilität und Betriebssicherheit für Anwender des Verkehrsleitsystems der vorliegenden Erfindung.

Das Verkehrsleitsystem ist auf Schnellverkehrsmittel, insbesondere spurgeführte, nicht beschränkt. Bei fahrerlosen oder automatischen Zugsystemen entfaltet es erfindungsgemäß große Wirkung. Eine mögliche bevorzugte Ausführungsform bei spurgeführten oder linienkonstanten Verkehrsmitteln an der Oberfläche wie Bussen, Straßenbahnen, Stadtbahnen, light rail etc. ist, dass Oberflächenhaltestellen räumlich so abgegrenzt werden, dass eine automatische Zählung der wartenden Fahrgäste möglich ist. Die Abgrenzung kann auch physisch z.B. durch Geländer, Glaswände u.ä. geschehen, und der Zugang zum Wartebereich kann mit Erwerb und Kontrolle der Chipkarten und mit den beschriebenen Mitteln der Sicherheitsüberprüfung geschehen.

Die Abgrenzung der Fahrwege von den Wartebereichen kann durch Bahnsteigtüren und ähnliche Absperrungen geschehen, wie sie beispielsweise in der EP 1 053 159 B1 offenbart sind. Somit ist einerseits ein gewisser Schutz der Wartenden z.B. auch vor klimatischen Situationen wie Kälte oder Hitze ermöglicht, andererseits wird gewährleistet, dass nur die korrekt gezählten und in Hinsicht auf Fahrberechtigung und Sicherheit vorgeprüften Fahrgäste das Verkehrsmittel besteigen.

Für ein Öffentliches Nahverkehrssystem in klimatisch extremen Regionen wird eine Variante bestehend aus verschiedenen Elementen bevorzugt. Die bevorzugte Variante ist sowohl für Busse und Buslinien als auch Trambahnen / Trambahnlinien und Stadtbahnfahrzeuge / Stadtbahnen (Light Rail) geeignet. Die Linien fahren an der Oberfläche und in der Regel, nicht aber zwangsweise, auf eigenem Fahrweg bzw. eigener Trasse.

Die wartenden Fahrgäste sind in überdachten und seitlich geschlossenen baulichen Anlagen, vorzugsweise containerartigen Bauten, in jedem Fall aber Bauten mit vorzugsweise Stahlkonstruktion und Verglasung untergebracht. Sie betreten diese Bauten zum Warten auf das Verkehrsmittel und vorzugsweise zur Kontrolle. Die Bauten haben vorzugsweise Wände mit Bahnsteigtüren, wenn erforderlich auch flexiblen Bahnsteigtüren, d.h. dort, wo Türen des Busses oder Schienenfahrzeugs sind, gehen auch Türen in der Fahrbahnseite des Wartehäuschens auf. Eine oder zwei der nicht der Fahrbahn bzw. dem Fahrweg zugewandten Seiten haben Ein- und Ausgangstüren für die Passagiere in das und aus dem Wartegebäude.

Das Wartegebäude kann auch teilweise aus textilen Strukturen bestehen, die in Leichtbau erstellt werden. Eine gewisse Wärmedämmung muss konstruktiv möglich sein, da an den Wänden Temperaturunterschiede bestehen. Der Wartebereich ist klimatisiert, d.h. über air condition wird für ein angenehmes Warteklima gesorgt. Das Fahrzeug fährt so nahe an die fahrbahnseitige Wand bzw. die Fahrbahnseitigen Türen heran, dass das Raumklima durch die Türöffnung nicht beeinträchtigt wird, d.h. möglichst wenig der temperierten Luft verloren geht. Die Energieversorgung sowohl des Wartebereiches als auch der Fahrzeuge ist autark, beispielsweise mit Hilfe von Brennstoffzellen, die Energie dafür kann mit Solarsystemen erzeugt werden (insbesondere in klimatisch heißen, sonnigen Gebieten).

Wartehallenelemente können longitudinal kombiniert, d.h. addiert werden, auch eine zentrale Eingangshalle mit Erweiterungen, bestehend aus Wartehallenelementen, ist denkbar.

Es besteht vorzugsweise Sicherheitsüberwachung, auch wie bereits beschrieben in Verbindung mit Ticketing, am Zugang zum Wartebereich, denkbar ist auch Metalldetektion, Detektion von Sprengstoffen, Biometrie, Scanner für Taschen etc.

Bei verschiedenen Fahrzeugen (verschiedenen Türen, verschiedenen Längen etc.) ist eine funkgesteuerte Übermittlung des Türbildes erforderlich, sowie evt1 eine Fahrgastleitung, d.h. es werden Sektoren bestimmt, in denen Ein- und Aussteigen getrennt stattfindet. Dies dient einer hohen Effizienz des Systems und der Reduktion von Haltezeiten (s. Stand der Technik EP 1 053 159 B1.).

Eine Fahrgastleitung erfordert erfindungsgemäß die Zählung der Fahrgäste, die mit dem Verkehrsmittel reisen möchten. Damit kann Linienführung, Frequenz der Fahrzeuge etc. über die tatsächliche Anzahl der eintreffenden Fahrgäste gesteuert werden (traffic on demand).

## Patentansprüche

1. Verkehrsleitsystem, umfassend:
- mindestens ein Leitmittel (24, 26, 28, 60) für mindestens ein Verkehrsmittel (14) und/oder für Personen;
- mehrere Erfassungseinheiten (44), umfassend mehrere persönliche Sender (32), die jeweils zum Mitführen durch eine Person bestimmt sind, wobei jeder Sender (32) eingerichtet ist, eine Kennung zu senden, sowie mehrere Empfangseinrichtungen (44), die zum Empfangen der Kennungen der Sender (32) vorgesehen sind, wobei die Empfangseinrichtungen (44) eingerichtet sind, die Position einer Person aufgrund von empfangenen Kennungen zu bestimmen; und
- eine Zentraleinheit (20), die mit den Erfassungseinheiten (40, 42, 44) und mit dem mindestens einen Leitmittel (24, 26, 28, 60) verbunden ist;
wobei die Erfassungseinheiten (40, 42, 44) dazu vorgesehen sind, die Anzahl von Personen zu ermitteln (110), die sich zu einem bestimmten Zeitpunkt in einem bestimmten räumlichen Bereich befinden;
und die Zentraleinheit (20) angepasst ist, in Abhängigkeit davon das mindestens eine Leitmittel (60) zu steuern (106, 76, 78), um das mindestens eine Verkehrsmittel (14) für einen optimalen Transport der erfassten Personen aus bestimmten räumlichen Bereichen hinaus bzw. in bestimmte räumliche Bereiche hinein zu leiten.

2. Verkehrsleitsystem, umfassend:
- mindestens ein Leitmittel (60) für mindestens ein Verkehrsmittel (14); und
- mehrere Erfassungseinheiten (40), umfassend Verkaufsautomaten (40) für Fahr- oder Eintrittskarten (58), wobei die Verkaufsautomaten (40) eingerichtet sind, die Position einer Person aufgrund der Position des entsprechenden Verkaufsautomaten (40) beim Kauf von Fahr- oder Eintrittskarten (58) zu bestimmen;
**gekennzeichnet durch**
- mindestens ein Leitmittel (24, 26, 28) für Personen; und
- eine Zentraleinheit (20), die mit den Erfassungseinheiten (40, 42, 44) und mit dem mindestens einen Leitmittel für des mindestens eine Verkehrsmittel (60) und dem mindestens einen Leitmittel für Personen (24, 26, 28) verbunden ist;
wobei die Erfassungseinheiten (40) dazu vorgesehen sind, die Anzahl von Personen zu ermitteln (110), die sich zu einem bestimmten Zeitpunkt in einem bestimmten räumlichen Bereich befinden;
und die Zentraleinheit (20) angepasst ist, in Abhängigkeit davon das mindestens eine Leitmittel für das mindestens eine Verkehrsmittel (60) zu steuern (106, 76, 78), um das mindestens eine Verkehrsmittel (14) für einen optimalen Transport der erfassten Personen aus bestimmten räumlichen Bereichen hinaus bzw. in bestimmte räumliche Bereiche hinein zu leiten, und das mindestens eine Leitmittel für Personen (24, 26, 28) zu steuern, um Personen zu leiten, um eine optimale Verteilung der erfassten Personen in den bestimmten räumlichen Bereichen zu erreichen.

3. Verkehrsleitsystem, umfassend:
- mindestens ein Leitmittel (60) für mindestens ein Verkehrsmittel (14);
- mehrere Erfassungseinheiten (42), umfassend Zugangskontrolleinrichtungen (42), wobei die Zugangskontrolleinrichtungen (42) eingerichtet sind, die Position einer Person aufgrund der Position einer durchquerten Zugangskontrollvorrichtung (42) zu bestimmen, wobei die Erfassungseinheiten (42) dazu vorgesehen sind, die Anzahl von Personen zu ermitteln (110), die sich zu einem bestimmten Zeitpunkt in einem bestimmten räumlichen Bereich befinden;
**gekennzeichnet durch**
- mindestens ein Leitmittel (24, 26, 28) für Personen; und
- eine Zentraleinheit (20), die mit den Erfassungseinheiten (40, 42, 44) und mit dem mindestens einen Leitmittel für das mindestens eine Verkehrsmittel (60) und dem mindestens einen Leitmittel für Personen (24, 26, 28) verbunden ist, wobei die Zentraleinheit (20) angepasst ist, in Abhängigkeit von der Anzahl von Personen, die sich zu einem bestimmten Zeitpunkt in einem bestimmten räumlichen Bereich befinden, das mindestens eine Leitmittel für das mindestens eine Verkehrsmittel (60) zu steuern (106, 76, 78), um das mindestens eine Verkehrsmittel (14) für einen optimalen Transport der erfassten Personen aus bestimmten räumlichen Bereichen hinaus bzw. in bestimmte räumliche Bereiche hinein zu leiten, und das mindestens eine Leitmittel für Personen (24, 26, 28) zu steuern, um Personen zu leiten, um eine optimale Verteilung der erfassten Personen in den bestimmten räumlichen Bereichen zu erreichen.

4. Verkehrsleitsystem nach Anspruch 3, wobei die Zugangskontrolleinrichtungen (42) Bildaufzeichnungsvorrichtungen (54) umfassen, wobei die Bildaufzeichnungsvorrichtungen (54) eingerichtet sind, die Position und/oder Geschwindigkeit einer Person oder eines von einer Person mitgeführten Gegenstands innerhalb des Erfassungsbereichs der entsprechenden Bildaufzeichnungsvorrichtungen (54) zu bestimmen, und wobei die Zentraleinheit (20) angepasst ist, in Abhängigkeit von der Anzahl der Personen, die sich zu einem bestimmten Zeitpunkt in einem bestimmten räumlichen Bereich befinden und von der Position und/oder Geschwindigkeit einer Person oder eines von einer Person mitgeführten Gegenstands das mindestens eine Leitmittel für das mindestens eine Verkehrsmittel (60) zu steuern (106, 76, 78), um das mindestens eine Verkehrsmittel (14) für einen optimalen Transport der erfassten Personen aus bestimmten räumlichen Bereichen hinaus bzw. in bestimmte räumliche Bereiche hinein zu leiten, und das mindestens eine Leitmittel für Personen (24, 26, 28) zu steuern, um Personen zu leiten, um eine optimale Verteilung der erfassten Personen in den bestimmten räumlichen Bereichen zu erreichen.

5. Verkehrsleitsystem nach einem der Ansprüche 1, 3 oder 4, wobei die Erfassungseinheiten weiter Verkaufsautomaten (40) für Fahr- oder Eintrittskarten (58) umfassen, wobei die Verkaufsautomaten (40) die Position einer Person aufgrund der Position des entsprechenden Verkaufsautomaten (40) beim Kauf von Fahr- oder Eintrittskarten (58) bestimmen können.

6. Verkehrsleitsystem nach Anspruch 5, wobei die Verkaufsautomaten (40) eine Gültigkeits-Reichweite oder ein entsprechendes Fahrtziel einer gekauften Fahrkarte ermitteln und daraus eine voraussichtliche Bewegungsrichtung, ein voraussichtliches Ziel oder eine voraussichtliche Fahrtweite eines Fahrkartenkäufers bestimmen können, und die Zentraleinheit (20) das Leitmittel (24, 26, 28, 60) in Abhängigkeit davon steuern kann.

7. Verkehrsleitsystem nach einem der Ansprüche 1, 2, oder 4 bis 6, wobei die Erfassungseinheiten weiter Zugangskontrolleinrichtungen (42) umfassen, und wobei die Zugangskontrolleinrichtungen (42) die Position einer Person aufgrund der Position einer durchquerten Zugangskontrollvorrichtung (42) bestimmen können.

8. Verkehrsleitsystem nach Anspruch 7, wobei die Zugangskontrolleinrichtungen (42) weiter die Durchgangsrichtung durch die entsprechende Zugangskontrollvorrichtung (42) bestimmen können, und die Zentraleinheit (20) das Leitmittel (24, 26, 28, 60) in Abhängigkeit von dieser Durchgangsrichtung steuern kann.

9. Verkehrsleitsystem nach einem der Ansprüche 1, 2, 3 und 5 bis 9, wobei die Erfassungseinheiten weiter Bildaufzeichnungsvorrichtungen (54) umfassen, wobei die Bildaufzeichnungsvorrichtungen (54) die Position und/oder Geschwindigkeit einer Person oder eines von einer Person mitgeführten Gegenstands innerhalb des Erfassungsbereichs der entsprechenden Bildaufzeichnungsvorrichtungen (54) bestimmen können, und die Zentraleinheit (20) das Leitmittel (24, 26, 28, 60) in Abhängigkeit von dieser Position bzw. Geschwindigkeit steuern kann.

10. Verkehrsleitsystem nach einem der Anspruch 2 bis 9, wenn nicht abhängig von Anspruch 1, wobei die Erfassungseinheiten mehrere persönliche Sender (32), die jeweils zum Mitführen durch eine Person bestimmt sind, wobei jeder Sender (32) eine Kennung senden kann, sowie mehrere Empfangseinrichtungen (44) zum Empfangen der Kennungen der Sender (32) umfassen, und wobei die Empfangseinrichtungen (44) die Position einer Person aufgrund von empfangenen Kennungen bestimmen können.

11. Verkehrsleitsystem nach einem der Ansprüche 1, 10 oder einem der Ansprüche 2 bis 9, wenn abhängig von Anspruch 1, wobei die persönlichen Sender (32) in einer Fahr- oder Eintrittskarte (58) integriert sind.

12. Verkehrsleitsystem nach Anspruch 11, wobei die Fahr- oder Eintrittskarte (58) biometrische Daten aufweist.

13. Verkehrsleitsystem nach Anspruch 12, wobei die Fahr- oder Eintrittskarte (58) ein Lesegerät aufweist, das angepasst ist, biometrische Daten einer die Fahr- oder Eintrittskarte (58) bedienenden Person einzulesen und mit den biometrischen Daten der Fahr- oder Eintrittskarte (58) zu vergleichen, wobei das Verkehrsleitsystem Zugangskontrolleinrichtungen umfasst, die angepasst sind, die Zutrittsberechtigung der bedienenden Person nur dann freizugeben, wenn deren eingelesene Daten mit denen der Fahr- oder Eintrittskarte (58) übereinstimmen.

14. Verkehrsleitsystem nach Anspruch 2 oder einem der Ansprüche 5 bis 9, wenn abhängig von Anspruch 2, wobei die Fahr- oder Eintrittskarte (58) ein Lesegerät aufweist, das angepasst ist, biometrische Daten einer die Fahr- oder Eintrittskarte (58) bedienenden Person einzulesen und mit den biometrischen Daten der Fahr- oder Eintrittskarte (58) zu vergleichen, wobei das Verkehrsleitsystem Zugangskontrolleinrichtungen umfasst, die angepasst sind, der bedienenden Person die Zutrittsberechtigung nur dann freizugeben, wenn deren eingelesene Daten mit denen der Fahr- oder Eintrittskarte (58) übereinstimmen.

15. Verkehrsleitsystem nach Anspruch 14, wobei die Verkaufsautomaten mit einer Vorrichtung ausgestattet sind, welche in der Lage ist, biometrische Merkmale einer Person abzufragen, und die Verkaufsautomaten mit einer Datenbank verbunden sind, mit der biometrische Daten von bestimmten Personen abgeglichen werden können, wobei die Verkaufsautomaten angepasst sind, die Ausgabe einer Karte an eine solche bestimmte Person zu verweigern.

16. Verkehrsleitsystem nach Anspruch 3 oder einem der Ansprüche 5 bis 9, wenn abhängig von Anspruch 3, wobei die Zugangskontrolleinrichtungen angepasst sind, von einer Fahr- oder Eintrittskarte (58) mit biometrischen Daten und einem Lesegerät, das angepasst ist, biometrische Daten einer die Fahr- oder Eintrittskarte (58) bedienenden Person einzulesen, abzufragen, ob die eingelesenen biometrischen Daten mit den biometrischen Daten der Fahr- oder Eintrittskarte (58) übereinstimmen, und der bedienenden Person die Zutrittsberechtigung nur dann freizugeben, wenn die biometrischen Daten übereinstimmen.

17. Verkehrsleitsystem nach Anspruch 1, 11 oder einem der Ansprüche 2 bis 9 oder 1 bis 16, wenn abhängig von Anspruch 1 oder Anspruch 10, wobei die Empfangseinrichtungen (44) aufgrund einer Veränderung der Position eines persönlichen Senders (32) die Bewegungsrichtung einer Person bestimmen können, und die Zentraleinheit (20) das Leitmittel (24, 26, 28, 60) in Abhängigkeit von der Bewegungsrichtung steuern kann.

18. Verkehrsleitsystem nach Anspruch 1, 10 oder einem der Ansprüche 2 bis 9 oder 11 bis 17, wenn abhängig von Anspruch 1 oder Anspruch 10, wobei die Empfangseinrichtungen (44) aufgrund einer Veränderung der Position eines Senders (32) die Geschwindigkeit einer Person in Bezug auf eine oder mehrere Empfangseinrichtungen (44) bestimmen können, und die Zentraleinheit (20) das Leitmittel (24, 26, 28, 60) in Abhängigkeit von der Geschwindigkeit steuern kann.

19. Verkehrsleitsystem nach Anspruch 1, 10 oder einem der Ansprüche 2 bis 9 oder 11 bis 18, wenn abhängig von Anspruch 1 oder Anspruch 10, wobei die Kennung der persönlichen Sender (32) eine eindeutige Identifikation einer Person aufweist.

20. Verkehrsleitsystem nach Anspruch 1, 10 oder einem der Ansprüche 2 bis 9 oder 11 bis 19, wenn abhängig von Anspruch 1 oder Anspruch 10, wobei die Kennung des persönlichen Senders (32) eine Gültigkeitsinformation aufweist, wobei die Gültigkeitsinformation eine erlaubte Zeitspanne, einen erlaubten räumlichen Bereich oder eine Fahrtreichweite oder -strecke angibt.

21. Verkehrsleitsystem nach Anspruch 20, wobei die Zentraleinheit (20) aufgrund der Gültigkeitsinformation das Leitmittel (24, 26, 28, 60) derart steuern kann, dass ein Träger des Senders (32) von einem nicht gestatteten räumlichen Bereich weggeführt bzw. davon ferngehalten wird.

22. Verkehrsleitsystem nach Anspruch 20 oder 21, wobei die Empfangseinrichtungen (44) ein Überschreiten der Zeitspanne, der Fahrtreichweite oder -strecke bzw. ein Eintreten in einen nicht erlaubten räumlichen Bereich erfassen können, und die Zentraleinheit (20) eine Meldung bzw. einen Alarm (116) über die erfolgte Überschreitung ausgeben kann.

23. Verkehrsleitsystem nach einem der vorhergehenden Ansprüche, wobei die Zentraleinheit (20) aus Position, Geschwindigkeit und/oder Bewegungsrichtung ein Bewegungsmuster von Personen ermitteln kann, und aufgrund dieses Bewegungsmusters das Leitmittel (24, 26, 28, 60) steuern oder eine Meldung bzw. einen Alarm (116) über das Auftreten eines bestimmten Bewegungsmuster ausgeben kann.

24. Verkehrsleitsystem nach einem der vorhergehenden Ansprüche, wobei das mindestens eine Leitmittel mindestens eins der folgenden umfasst:
- optische Leitmittel (24);
- akustische Leitmittel (26);
- Absperr- bzw. Freigabemittel (28);
- Fahrtreppen (6), Transportbänder oder Fahrstühle; und
- Mittel (60) zur Steuerung von Verkehrsmitteln (14).

25. Verkehrsleitsystem nach einem der vorhergehenden Ansprüche, wobei eine Datenkommunikation mit der Steuerung des mindestens einen Verkehrsmittels stattfindet, so dass bei Bedarf Verkehrsmitteleinheiten dem System hinzugefügt werden oder aus dem System genommen werden können.

26. Verkehrsleitsystem nach Anspruch 1, 10 oder einem der Ansprüche 2 bis 9 oder 11 bis 25, wenn abhängig von Anspruch 1 oder Anspruch 10, wobei die Erfassungseinheiten (40, 42, 44) weiter mehrere Sender umfassen, die jeweils zur Anbringung an Gepäckstücken bestimmt sind, wobei jeder Sender eingerichtet ist, eine Kennung zu senden, und die Empfangseinrichtungen (44) eingerichtet sind, die Position eines Gepäckstückes aufgrund von empfangenen Kennungen zu bestimmen, und wobei die Zentraleinheit (20) in Abhängigkeit davon das mindestens eine Leitmittel (60) steuern kann.

## Claims

1. A transport guidance system, comprising:
- at least one guidance means (24, 26, 28, 60) for at least one transport means (14) and/or for persons;
- a plurality of recording units (44), comprising a plurality of personal transmitters (32) which each are intended to be carried by a person, wherein each transmitter (32) is set up to send an identifier, and a plurality of receiving devices (44) which are provided for receiving the identifiers of the transmitters (32), wherein the receiving devices (44) are set up to determine the position of a person based on received identifiers; and
- a central unit (20) which is connected with the recording units (40, 42, 44) and with the at least one guidance means (24, 26, 28, 60);
wherein the recording units (40, 42, 44) are provided for determining (110) the number of people located at a given time in a given spatial area;
and the central unit (20) is adapted to control (106, 76, 78), in dependence thereon, the at least one guidance means (60) so as to guide the at least one transport means (14) for an optimal transport of the recorded persons out of given spatial areas or into given spatial areas.

2. The transport guidance system, comprising:
- at least one guidance means (60) for at least one transport means (14); and
- a plurality of recording units (40), comprising vending machines (40) for tickets or entrance cards (58), wherein the vending machines (40) are set up to determine the position of a person based on the position of the corresponding vending machine (40) during the purchase of tickets or entrance cards (58);
**characterized by**
- at least one guidance means (24, 26, 28) for persons; and
- a central unit (20) which is connected with the recording units (40, 42, 44), and with the at least one guidance means (60) for the at least one transport means, and with the at least one guidance means (24, 26, 28) for persons;
wherein the recording units (40) are provided for determining (110) the number of persons located at a given time in a given spatial area;
and the central unit (20) is adapted to control (106, 76, 78), in dependence thereon, the at least one guidance means for the at least one transport means (60) so as to guide the at least one transport means (14) for an optimal transport of the recorded persons out of given spatial areas or into given spatial areas, and to control the at least one guidance means for persons (24, 26, 28) to guide persons to achieve an optimal distribution of the recorded persons in the given spatial areas.

3. The transport guidance system, comprising:
- at least one guidance means (60) for at least one transport means (14);
- a plurality of recording units (42), comprising access control devices (42), wherein the access control devices (42) are set up for determining the position of a person based on the position of a traversed access control device (42), wherein the recording units (42) are provided for determining (110) the number of persons located at a given time in a given spatial area;
**characterized by**
- at least one guidance means (24, 26, 28) for persons; and
- a central unit (20) which is connected with the recording units (40, 42, 44) and with the at least one guidance means for the at least one transport means (60) and with the at least one guidance means for persons (24, 26, 28), wherein the central unit (20) is adapted to control (106, 76, 78), depending on the number of people located at a given time in a given spatial area, the at least one guidance means for the at least one transport means (60) so as to guide the at least one transport means (14) for an optimal transport of the recorded persons out of given spatial areas or into given spatial areas, and to control the at least one guidance means for persons (24, 26, 28) to guide people to achieve an optimal distribution of the recorded persons in the given spatial areas.

4. The transport guidance system according to claim 3, wherein the access control devices (42) comprise image recording devices (54), wherein the image recording devices (54) are set up for determining the position and/or speed of a person or an object carried by a person within the recording range of the corresponding image recording devices (54), and wherein the central unit (20) is adapted to control (106, 76, 78), depending on the number of persons located at a given time in a given spatial area and on the position and/or speed of a person or of an object carried by a person, the at least one guidance means for the at least one transport means (60) so as to guide the at least one transport means (14) for an optimal transport of the recorded persons out of given spatial areas or into given spatial areas, and to control the at least one guidance means for persons (24, 26, 28) to guide persons to achieve an optimal distribution of the recorded persons in the given spatial areas.

5. The transport guidance system according to any one of the claims 1, 3, or 4, wherein the recording units further comprise vending machines (40) for tickets or entrance cards (58), wherein the vending machines (40) are able to determine the position of a person based on the position of the corresponding vending machine (40) during the purchase of tickets or entrance cards (58).

6. The transport guidance system according to claim 5, wherein the vending machines (40) are able to detect a validity range or a corresponding destination of a purchased ticket and determine therefrom an expected moving direction, an expected final destination, or an expected distance of the ride of a ticket purchaser, and the central unit (20) is able to control the guidance means (24, 26, 28, 60) in dependence thereon.

7. The transport guidance system according to any one of the clams 1, 2, or 4 to 6, wherein the recording units further comprise access control devices (42), and wherein the access control devices (42) are able to determine the position of a person based on the position of a traversed access control device (42).

8. The transport guidance system according to claim 7, wherein the access control devices (42) are further able to determine the direction of passage through the corresponding access control device (42), and the central unit (20) is able to control the guidance means (24, 26, 28, 60) in dependence on said direction of passage.

9. The transport guidance system according to any one of the claims 1, 2, 3, and 4 to 5, wherein the recording units further comprise image recording devices (54), wherein the image recording devices (54) are able to determine the position and/or the speed of a person or an object carried by a person within the recording range of the corresponding image recording devices (54), and the central unit (20) is able to control the guidance means (24, 26, 28, 60) in dependence on said position or speed.

10. The transport guidance system according to any one of the claims 2 to 9, if not dependent on claim 1, wherein the recording units comprise a plurality of personal transmitters (32) which each are intended to be carried by a person, wherein each transmitter (32) can send an identifier, and a plurality of receiving units (44) for receiving the identifiers of the transmitters (32), and wherein the receiving units (44) are able to determine the position of a person based on the received identifiers.

11. The transport guidance system according to any one of the claims 1, 10, or any one of the claims 2 to 9, if dependent on claim 1, wherein the personal transmitters (32) are integrated in a ticket or entrance card (58).

12. The transport guidance system according to claim 11, wherein the ticket or entrance card (58) includes biometric data.

13. The transport guidance system according to claim 12, wherein the ticket or entrance card (58) has a reading device which is adapted to read in biometric data of a person using the ticket or entrance card (58) and to compare with the biometric data of the ticket or entrance card (58), wherein the transport guidance system comprises access control devices which are adapted to release the access authorization of the using person only if the read-in data of the same correspond to the ones of the ticket or entrance card (58).

14. The transport guidance system according to claim 2 or any of the claims 5 to 9, if dependent on claim 2, wherein the ticket or entrance card (58) has a reading device which is adapted to read in biometric data of a person using the ticket or entrance card (58) and to compare with the biometric data of the ticket or entrance card (58), wherein the transport guidance system comprises access control devices which are adapted to release the access authorization of the using person only if the read-in data of the same correspond to the ones of the ticket or entrance card (58).

15. The transport guidance system according to claim 14, wherein the vending machines are equipped with a device which is capable to inquire biometric features of a person, and the vending machines are connected with a database by means of which biometric data of certain persons can be compared, wherein the vending machines are adapted to deny the issuance of a card to such a certain person.

16. The transport guidance system according to claim 3 or any one of the claims 5 to 9, if dependent on claim 3, wherein the access control devices are adapted to inquire from a ticket or entrance card (58) having biometric data and from a reading device which is adapted to read in biometric data of a person using the ticket or entrance card (58), if the read-in biometric data correspond to the biometric data of the ticket or entrance card (58), and to release the access authorization of the using person only if the biometric data are corresponding.

17. The transport guidance system according to claim 1, 11, or any one of the claims 2 to 9 or 1 to 16, if dependent on claim 1 or claim 10, wherein the receiving devices (44) are able to determine the moving direction of a person based on the change of the position of a personal transmitter (32), and the central unit (20) is able to control the guidance means (24, 26, 28, 60) in dependence on the moving direction.

18. The transport guidance system according to claim 1, 10, or any one of the claims 2 to 9 or 11 to 17, if dependent on claim 1 or claim 10, wherein, based on a change of the position of the transmitter (32), the receiving devices (44) are able to determine the speed of a person with respect to one or more receiving devices (44), and the central unit (20) is able to control the guidance means (24, 26, 28, 60) in dependence on the speed.

19. The transport guidance system according to claim 1, 10, or any one of the claims 2 to 9, or 11 to 18, if dependent on claim 1 or claim 10, wherein the identifier of the personal transmitter (32) includes a unique identification of a person.

20. The transport guidance system according to claim 1, 10, or any one of the claims 2 to 9, or 11 to 19, if dependent on claim 1 or claim 10, wherein the identifier of the personal transmitter (32) includes a validity information, wherein the validity information specifies a permitted time period, a permitted spatial area, or a range or route of the ride.

21. The transport guidance system according to claim 20, wherein the central unit (20) is able to control the guidance means (24, 26, 28, 60) based on the validity information in such a manner that a carrier of the transmitter (32) can be guided away from a non-permitted spatial area or can be kept away therefrom.

22. The transport guidance system according to claim 20 or claim 21, wherein the receiving devices (44) are able to detect an exceeding of the time period, of the range or route of the ride or an entering into a non-permitted spatial area, and the central unit (20) is able to output a message or alarm (116) with respect to the occurred exceedance.

23. The transport guidance system according to any one of the preceding claims, wherein the central unit (20) is able to determine a movement pattern of persons from position, speed and/or moving direction and, based on said movement pattern, is able to control said guidance means (24, 26, 28, 60) or to output a message or an alarm (116) with respect to the occurrence of a certain movement pattern.

24. The transport guidance system according to any one of the preceding claims, wherein the at least one guidance means comprises at least one of the following:
- optical guidance means (24);
- acoustic guidance means (26);
- locking means or releasing means (28);
- escalators (6), conveyor belts or elevators; and
- means (60) for controlling the transport means (14).

25. The transport guidance system according to any one of the preceding claims, wherein data communication with the control of the at least one transport means takes place, so that, if required, transport means units can be added to the system or can be taken out of the system.

26. The transport guidance system according to claim 1, 10 or any one of the claims 2 to 9 or 11 to 25, if dependent on claim 1 or claim 10, wherein the recording units (40, 42, 44) further comprise a plurality of transmitters which each are intended to be attached to pieces of luggage, wherein each transmitter is set up to transmit an identifier, and the receiving devices (44) are set up to determine the position of a piece of luggage based on the received identifiers, and wherein the central unit (20) is able to control the at least one guidance means (60) in dependence thereon.

## Revendications

1. Système de guidage de trafic, comprenant :
- au moins un moyen de guidage (24, 26, 28, 60) pour au moins un moyen de transport (14) et/ou pour des personnes ;
- plusieurs unités de détection (44), comprenant plusieurs émetteurs (32) individuels, qui sont destinés chacun à être emportés par une personne, chaque émetteur (32) étant aménagé pour émettre un code, et plusieurs dispositifs de réception (44), qui sont prévus pour la réception des codes des émetteurs (32), les dispositifs de réception (44) étant aménagés pour déterminer la position d'une personne sur la base de codes reçus ; et
- une unité centrale (20), qui est reliée aux unités de détection (40, 42, 44) et avec le au moins un moyen de guidage (24, 26, 28, 60) ;
les outils de détection (40, 42, 44) étant prévus pour déterminer le nombre de personnes (110) qui se trouvent à un moment donné dans une zone d'espace définie ;
et l'unité centrale (20) étant adaptée pour commander (106, 76, 78) le au moins un moyen de guidage(60) en fonction de cela pour guider le au moins un moyen de transport (14) pour un transport optimal des personnes détectées à partir de zones d'espace définies ou à l'intérieur de zones d'espace définies.

2. Système de guidage de circulation comprenant :
- au moins un moyen de guidage(60) pour au moins un moyen de transport (14) ; et
- plusieurs unités de détection (40), comprenant des automates de vente (40) pour des billets de transport ou des billets d'entrée (58), les automates de vente étant aménagés (40) pour déterminer la position d'une personne sur la base de la position de l'automate de vente (40) correspondant lors de l'achat de billets de transport ou de billets d'entrée (58) ;
**caractérisé par**
- au moins un moyen de guidage(24, 26, 28) pour des personnes ; et
- une unité centrale (20), qui est reliée aux unités de détection (40, 42, 44) et au au moins un moyen de guidage pour le au moins un moyen de transport (60) et au au moins un moyen de guidage (24, 26, 28) pour des personnes ;
les unités de détection (40) étant prévues pour déterminer le nombre de personnes (110) qui se trouvent à un moment défini dans une zone d'espace définie ;
et l'unité centrale (20) étant adaptée pour commander (106, 76, 78) en fonction de cela le au moyen de guidage pour le au moins un moyen de transport (60), afin de guider le au moins un moyen de transport (14) pour un transport optimal des personnes détectées à partir de zones d'espace définies et à l'intérieur de zones d'espace définies, et de commander le au moins un moyen de guidage pour des personnes (24, 26, 28), pour guider des personnes, pour obtenir une répartition optimale des personnes détectées dans les zones d'espace définies.

3. Système de guidage de circulation comprenant :
- au moins un moyen de guidage(60) pour au moins un moyen de transport (14) ;
- plusieurs unités de détection (42), comprenant des dispositifs de contrôle d'accès (42), les dispositifs de contrôle d'accès (42) étant aménagés pour déterminer la position d'une personne sur la base de la position d'un dispositif de contrôle d'accès (42) traversé, les unités de détection étant prévues pour déterminer le nombre de personnes (110) qui se trouvent à un moment défini dans une zone d'espace définie ;
**caractérisé par**
- au moins un moyen de guidage(24, 26, 28) pour des personnes ; et
- une unité centrale (20), qui est reliée aux unités de détection (40, 42, 44) et au au moins un moyen de guidage pour le au moins un moyen de transport (60) et au au moins un moyen de guidage pour des personnes (24, 26, 28), l'unité centrale (20) étant adaptée pour commander (106, 76, 78) en fonction du nombre de personnes, qui se trouvent à un moment défini dans une zone d'espace définie, le au moins un moyen de guidage pour le au moins un moyen de transport (60), pour guider le au moins un moyen de transport (14) pour un transport optimal des personnes détectées à partir de zones d'espace définies ou à l'intérieur de zones d'espace définies, et commander le au moins un moyen de guidage pour des personnes (24, 26, 28), pour guider des personnes, pour obtenir une répartition optimale des personnes détectées dans les zones d'espace définies.

4. Système de guidage de circulation selon la revendication 3, les dispositifs de contrôle d'accès (42) comprenant des dispositifs d'enregistrement d'image (54), les dispositifs d'enregistrement d'image (54) étant aménagés pour déterminer la position et/ou la vitesse d'une personne ou d'un objet emporté par une personne à l'intérieur de la zone de détection des dispositifs d'enregistrement d'images (54) correspondants, et l'unité centrale (20) étant adaptée pour commander (106, 76, 78) le au moins un moyen de guidage pour le au moins un moyen de transport (60) en fonction du nombre de personnes qui se trouvent à un moment défini dans une zone d'espace définie et de la position et/ou de la vitesse d'une personne ou d'un objet emporté par une personne, pour guider le au moins un moyen de transport (14) pour un transport optimal des personnes détectées à partir de zones d'espace définies ou à l'intérieur de zones d'espace définies, et commander le au moins un moyen de guidage pour des personnes (24, 26, 28), pour guider des personnes, pour obtenir une répartition optimale des personnes détectées dans les zones d'espace définies.

5. Système de guidage de circulation selon l'une quelconque des revendications 1, 3 ou 4, les unités de détection comprenant également des automates de vente (40) pour des billets de transport ou des billets d'entrée (58), les automates de vente (40) pouvant déterminer la position d'une personne sur la base de la position de l'automate de vente (40) correspondant lors de l'achat de billets de transport ou des billets d'entrée (58).

6. Système de guidage de circulation selon la revendication 5, les automates de vente (40) déterminant une autonomie de validité ou une destination correspondante d'un billet de transport acheté et pouvant déterminer à partir de là une direction de déplacement probable, une destination probable ou une distance de transport probable d'un acheteur de billet de transport, et l'unité centrale (20) pouvant commander le moyen de guidage(24, 26, 28, 60) en fonction de cela.

7. Système de guidage de circulation selon l'une quelconque des revendications 1, 2, ou 4 à 6, les unités de détection comprenant également des dispositifs de contrôle d'accès (42), et les dispositifs de contrôle d'accès (42) pouvant déterminer la position d'une personne sur la base de la position d'un dispositif de contrôle d'accès (42) traversé.

8. Système de guidage de circulation selon la revendication 7, les dispositifs de contrôle d'accès (42) pouvant déterminer également la direction de passage par le dispositif de contrôle d'accès (42) correspondant, et l'unité centrale (20) pouvant commander le moyen de guidage(24, 26, 28, 60) en fonction de cette direction de passage.

9. Système de guidage de circulation selon l'une quelconque des revendications 1, 2, 3 et 5 à 9, les unités de détection comprenant également des dispositifs d'enregistrement d'image (54), les dispositifs d'enregistrement d'image (54) pouvant déterminer la position et/ou la vitesse d'une personne ou d'un objet emporté par une personne à l'intérieur de la zone de détection des dispositifs d'enregistrement d'image (54) correspondants, et l'unité centrale (20) pouvant commander le moyen de guidage(24, 26, 28, 60) en fonction de cette position ou de cette vitesse.

10. Système de guidage de circulation selon l'une quelconque des revendications 2 à 9, si non dépendant de la revendication 1, les unités de détection comprenant plusieurs émetteurs (32) individuels, qui sont destinés chacun à être emportés par une personne, chaque émetteur (32) pouvant envoyer un code, ainsi que plusieurs dispositifs de réception (44) pour la réception des codes des émetteurs (32), et les dispositifs de réception (44) pouvant déterminer la position d'une personne sur la base de codes reçus.

11. Système de guidage de circulation selon l'une quelconque des revendications 1, 10 ou l'une quelconque des revendications 2 à 9, si dépendant de la revendication 1, les émetteurs (32) individuels étant intégrés dans un billet de transport ou un billet d'entrée (58).

12. Système de guidage de circulation selon la revendication 11, le billet de transport ou le billet d'entrée (58) présentant des données biométriques.

13. Système de guidage de circulation selon la revendication 12, le billet de transport ou le billet d'entrée (58) présentant un lecteur qui est adapté pour entrer des données biométriques d'une personne utilisant le billet de transport ou le billet d'entrée (58) et comparer avec les données biométriques du billet de transport ou du billet d'entrée (58), le système de guidage de circulation comprenant des dispositifs de contrôle d'accès qui sont adaptés pour ne valider l'autorisation d'accès de la personne utilisatrice que dans le cas où ses données entrées coïncident avec celles du billet de transport ou du billet d'entrée (58).

14. Système de guidage de circulation selon la revendication 2 ou l'une quelconque des revendications 5 à 9, si dépendant de la revendication 2, le billet de transport ou le billet d'entrée (58) présentant un lecteur qui est adapté pour entrer des données biométriques d'une personne utilisant le billet de transport ou le billet d'entrée (58) et les comparer avec les données biométriques du billet de transport ou du billet d'entrée (58), le système de guidage de circulation comprenant des dispositifs de contrôle d'accès qui sont adaptés pour valider l'autorisation d'accès de la personne utilisatrice uniquement dans le cas où ses données entrées coïncident avec celles du billet de transport ou du billet d'entrée (58).

15. Système de guidage de circulation selon la revendication 14, les automates de vente étant équipés d'un dispositif qui est en mesure d'interroger des caractéristiques biométriques d'une personne, et les automates de vente étant reliés à une banque de données avec laquelle des données biométriques de personnes définies peuvent être harmonisées, les automates de vente étant adaptés pour refuser l'émission d'un billet à une telle personne définie.

16. Système de guidage de circulation selon la revendication 3 ou l'une quelconque des revendications 5 à 9, si dépendant de la revendication 3, les dispositifs de contrôle d'accès étant adaptés pour interroger à partir d'un billet de transport ou d'un billet d'entrée (58) avec des données biométriques et un lecteur qui est adapté pour entrer des données biométriques d'une personne utilisant le billet de transport ou le billet d'entrée (58), pour savoir si les données biométriques entrées coïncident avec les données biométriques du billet de transport ou du billet d'entrée (58), et ne valider l'autorisation d'accès pour la personne utilisatrice que dans le cas où les données biométriques coïncident.

17. Système de guidage de circulation selon la revendication 1, 11 ou l'une quelconque des revendications 2 à 9 ou 1 à 16, si dépendant de la revendication 1 ou de la revendication 10, les dispositifs de réception (44) pouvant déterminer la direction de déplacement d'une personne sur la base d'une modification de la position d'un émetteur (32) individuel et l'unité centrale (20) pouvant commander le moyen de guidage (24, 26, 28, 60) en fonction de la direction de déplacement.

18. Système de guidage de circulation selon la revendication 1, 10 ou l'une quelconque des revendications 2 à 9 ou 11 à 17, si dépendant de la revendication 1 ou de la revendication 10, les dispositifs de réception (44) pouvant déterminer la vitesse d'une personne par rapport à un ou plusieurs dispositifs de réception (44) sur la base d'une variation de la position d'un émetteur (32), et l'unité centrale (20) pouvant commander le moyen de guidage(24, 26, 28, 60) en fonction de la vitesse.

19. Système de guidage de circulation selon la revendication 1, 10 ou l'une quelconque des revendications 2 à 19 ou 11 à 18, si dépendant de la revendication 1 ou de la revendication 10, le code des émetteurs (32) individuels présentant une identification claire d'une personne.

20. Système de guidage de circulation selon la revendication 1, 10 ou l'une quelconque des revendications 2 à 9 ou 11 à 19, si dépendant de la revendication 1 ou de la revendication 10, le code de l'émetteur (32) individuel présentant une information de validité, l'information de validité indiquant un laps de temps autorisé, une zone d'espace autorisée ou une distance ou un tronçon de transport.

21. Système de guidage de circulation selon la revendication 20, l'unité centrale (20) pouvant commander le moyen de guidage (24, 26, 28, 60) sur la base de l'information de validité de telle sorte qu'un support de l'émetteur (32) est guidé à partir d'une zone d'espace non autorisée ou est éloigné de celle-ci.

22. Système de guidage de circulation selon la revendication 20 ou 21, les dispositifs de réception (44) pouvant détecter un dépassement du laps du temps, de la distance ou du tronçon de transport ou une entrée dans une zone d'espace non autorisée, et l'unité centrale (20) pouvant éditer un message ou une alarme (116) concernant le dépassement effectué.

23. Système de guidage de circulation selon l'une quelconque des revendications précédentes, l'unité centrale (20) pouvant déterminer un modèle de déplacement de personnes à partir de la position, de la vitesse et/ou de la direction de déplacement, et pouvant commander le moyen de guidage (24, 26, 28, 60) sur la base de ce modèle de déplacement ou éditer un message ou une alarme (116) concernant l'apparition d'un modèle de déplacement défini.

24. Système de guidage de circulation selon l'une quelconque des revendications précédentes, le au moins un moyen de guidage comprenant au moins l'un des moyens suivants :
- moyens de guidage visuels (24) ;
- moyens de guidage sonores (26) ;
- moyens de blocage et d'autorisation (28) ;
- escaliers mécaniques (6), bandes transporteuses ou ascenseurs ; et
- des moyens (60) pour la commande de moyens de transport (14).

25. Système de guidage de circulation selon l'une quelconque des revendications précédentes, une communication de données ayant lieu avec la commande du au moins un moyen de transport, de sorte que, le cas échéant, des unités de moyen de transport peuvent être ajoutées au système ou enlevées du système.

26. Système de guidage de circulation selon la revendication 1, 10 ou l'une quelconque des revendications 2 à 9 ou 11 à 25, si dépendant de la revendication 1 ou de la revendication 10, les dispositifs de détection (40, 42, 44) comprenant également plusieurs émetteurs qui sont destinés chacun à être placés sur des bagages, chaque émetteur étant aménagé pour émettre un code, et les dispositifs de réception (44) étant aménagés pour pouvoir déterminer la position d'un bagage sur la base de codes reçus, et l'unité centrale (20) pouvant commander le au moins un moyen de guidage(60) en fonction de cela.
